# EUROPÄISCHE PATENTSCHRIFT

(11) **EP 4 219 020 B1**
(45) Veröffentlichungstag und Bekanntmachung des Hinweises auf die Patenterteilung: **10.09.2025**
(21) Anmeldenummer: 23171569.9
(22) Anmeldetag: 23.01.2019
(51) Int. Cl.: B05B 7/14

(54) **MEHRFARBENPULVERZENTRUM ZUM BEDARFSWEISEN VERSORGEN VON MINDESTENS EINER PULVERSPRÜHEINRICHTUNG MIT BESCHICHTUNGSPULVER UNTERSCHIEDLICHER ART**
MULTICOLOR POWDER CENTER FOR SUPPLYING AT LEAST ONE POWDER SPRAYING DEVICE WITH COATING POWDER OF DIFFERENT TYPES AS REQUIRED
CENTRE DE POUDRE MULTICOLORE PERMETTANT D'ALIMENTER EN CAS DE BESOIN AU MOINS UN DISPOSITIF DE PULVÉRISATION DE POUDRE DE REVÊTEMENT DE DIFFÉRENTS TYPES

(30) Priorität: 23.01.2018 DE 102018000504
(43) Veröffentlichungstag der Anmeldung: 02.08.2023
(62) Teilanmeldung aus: 19703017.4
(73) Patentinhaber: Gema Switzerland GmbH, 9200 Gossau (CH)
(72) Erfinder: Mlakar, Roman, 8280 Kreuzlingen (CH); Steinemann, Mark, 8353 Elgg (CH); Sanwald, Marco, 9030 Abtwil (CH); Mauchle, Felix, 9030 Abtwil (CH)
(74) Vertreter: Meissner Bolte Partnerschaft mbB

(56) Entgegenhaltungen:
- WO-A1-00/29124

## Beschreibung

Die Erfindung betrifft ein Mehrfarbenpulverzentrum zum bedarfsweisen Versorgen von mindestens einer Pulversprüheinrichtung mit Beschichtungspulver unterschiedlicher Art. Siehe hierzu WO00/29124.

Das erfindungsgemäße Mehrfarbenpulverzentrum eignet sich insbesondere für die Pulverversorgung von zur elektrostatischen Sprühbeschichtung von Gegenständen mit Pulver eingesetzten Pulversprüheinrichtungen, bei welcher sich frisches Beschichtungspulver (hierin auch "Frischpulver" genannt) und gegebenenfalls zurückgewonnenes Beschichtungspulver (hierin auch "Recovery Pulver" genannt) in Pulverbehältern befindet und durch eine Pumpeneinheit mit mindestens einer Pulverpumpe, beispielsweise in Gestalt eines Pulverinjektors oder in Gestalt einer Pulverdichtstrompumpe, einer oder mehreren Sprühvorrichtungen bzw. Pulversprüheinrichtungen zugeführt werden. Die Sprühvorrichtungen/Pulversprüheinrichtungen können beispielsweise Handpistolen oder automatische Pistolen sein.

Der Erfindung liegt die Problemstellung zugrunde, dass Pulverbeschichtungsanlagen und die zugehörigen Pulverversorgungsvorrichtungen bei einem Pulverwechsel (Wechsel von einer Pulversorte auf eine andere Pulversorte), und insbesondere bei einem Farbwechsel (Wechsel von Pulver einer ersten Farbe auf ein Pulver mit einer anderen zweiten Farbe) sorgfältig gereinigt werden müssen, da bereits einige wenige Pulverpartikel der früheren Pulversorte Beschichtungsfehler bei der Beschichtung mit der neuen Pulversorte zur Folge haben können.

Durch die Erfindung soll die Aufgabe gelöst werden, eine Möglichkeit zu schaffen, durch welche ein Pulverwechsel auf einfache Weise schnell möglich bzw. eine Mehrfarbensprühbeschichtung möglichst effizient realisierbar ist.

Diese Aufgabe wird gemäß der Erfindung durch die Merkmale des unabhängigen Patentanspruchs 1 gelöst. Vorteilhafte Weiterbildungen des erfindungsgemäßen Mehrfarbenpulverzentrums sind in den abhängigen Patentansprüchen angegeben.

Demgemäß wird insbesondere ein Mehrfarbenpulverzentrum zum bedarfsweisen Versorgen von mindestens einer Pulversprüheinrichtung mit Beschichtungspulver unterschiedlicher Art angegeben, wobei das Mehrfarbenpulverzentrum einen ersten Pulverbehälter zur Aufnahme von Beschichtungspulver einer ersten Art und mindestens einen zweiten Pulverbehälter zur Aufnahme von Beschichtungspulver einer zweiten Art aufweist. Darüber hinaus ist mindestens eine Pulverabgabeeinrichtung in Gestalt einer Pumpeneinheit mit mindestens einer Pulverpumpe, insbesondere Dichtstrompulverpumpe oder Dünnstrompulverpumpe, vorgesehen. Die Druckseite der Pulverpumpe ist strömungsmäßig mit dem Pulvereinlass einer Pulversprüheinrichtung, wie beispielsweise einer Handpistole oder einer automatischen Pulverpistole, verbunden oder verbindbar.

Gemäß einem Aspekt der Erfindung ist insbesondere vorgesehen, dass die mindestens eine Pumpeneinheit und/oder die Pulverbehälter derart relativ zueinander bewegbar sind, dass bedarfsweise die Saugseite der mindestens einen Pulverpumpe strömungsmäßig entweder mit dem Inneren des ersten Pulverbehälters oder mit den Inneren des mindestens einen zweiten Pulverbehälters verbunden oder verbindbar ist.

Gemäß Ausführungsformen der Erfindung ist beispielsweise die Pumpeneinheit derart relativ zu den Pulverbehältern bewegbar, dass bedarfsweise die Saugseite der mindestens einen Pulverpumpe strömungsmäßig entweder mit dem Inneren des ersten Pulverbehälters oder mit dem Inneren des mindestens einen zweiten Pulverbehälters verbunden oder verbindbar ist.

Dadurch, dass das erfindungsgemäße Mehrfarbenpulverzentrum mindestens eine relativ zu den Pulverbehältern bewegbare Pumpeneinheit aufweist, ist in einer leicht zu realisierenden und insbesondere effektiven Weise ein Pulverwechsel bzw. ein Mehrfarbensprühbeschichtungsbetrieb möglich. Hierzu ist es lediglich erforderlich, dass die Pumpeneinheit von einem ersten Pulverbehälter zu einem zweiten Pulverbehälter transferiert wird, so dass dann die Saugseite der Pumpeneinheit mit dem Inneren des zweiten Pulverbehälters verbindbar ist.

Gemäß einem Aspekt der vorliegenden Erfindung ist ferner eine Reinigungsstation vorgesehen zum bedarfsweisen Reinigen der Pumpeneinheit, eines von der Pumpeneinheit zu mindestens einer Pulversprüheinrichtung führenden Leitungssystems und/oder mindestens einer Pulversprüheinrichtung. Diese bedarfsweise Reinigung findet insbesondere bei einem Wechsel von einer ersten Pulverart auf eine hiervon verschiedene zweite Pulverart statt. In diesem Zusammenhang ist es denkbar, dass die Pumpeneinheit derart relativ zu der Reinigungsstation bewegbar ist, dass diese bedarfsweise in oder an der Reinigungsstation gereinigt und insbesondere mit Reinigungsdruckluft gespült werden kann. Alternativ hierzu ist es denkbar, dass die Reinigungsstation derart relativ zu der Pumpeneinheit bewegbar ist, dass die Pumpeneinheit bedarfsweise in oder an der Reinigungsstation gereinigt und insbesondere mit Reinigungsdruckluft gespült werden kann.

Gemäß Ausführungsformen des erfindungsgemäßen Mehrfarbenpulverzentrums ist der Reinigungsstation und/oder der Pumpeneinheit selber ein Antrieb zugeordnet, um somit die Reinigungsstation relativ zu der Pumpeneinheit derart bewegen zu können, dass die Pumpeneinheit bedarfsweise in oder an der Reinigungsstation gereinigt und insbesondere mit Reinigungsdruckluft gespült werden kann.

In bevorzugten Realisierungen des erfindungsgemäßen Mehrfarbenpulverzentrums ist vorgesehen, dass der mindestens einen Pumpeneinheit eine Wagen- oder Schlittenanordnung zugeordnet ist, mit Hilfe welcher die Pumpeneinheit in einer horizontalen Ebene und oberhalb der Pulverbehälter sowie relativ zu diesen geführt bewegbar ist. Alternativ oder zusätzlich hierzu kann der Pumpeneinheit auch eine Vertikalführungseinheit zugeordnet sein zum bedarfsweisen Bewegen der Pumpeneinheit oder Teilen hiervon in vertikaler Richtung relativ zu den Pulverbehältern.

Gemäß Ausführungsformen des erfindungsgemäßen Mehrfarbenpulverzentrums ist vorgesehen, dass dem ersten Pulverbehälter und/oder dem mindestens einen zweiten Pulverbehälter ein Antrieb, insbesondere Linearantrieb, zugeordnet ist zum bedarfsweisen Bewegen des entsprechenden Pulverbehälters relativ zu der Pumpeneinheit. Denkbar in diesem Zusammenhang ist es insbesondere, dass der erste Pulverbehälter und der mindestens eine zweite Pulverbehälter jeweils unabhängig voneinander relativ zu der Pumpeneinheit bewegbar sind.

Gemäß Ausführungsformen des erfindungsgemäßen Mehrfarbenpulverzentrums weist die mindestens eine Pumpeneinheit mindestens zwei insbesondere unabhängig voneinander betreibbare Pulverpumpen auf, welche in der Pumpeneinheit derart angeordnet sind, dass in einem Zustand, wenn die Pumpeneinheit mit einem Pulverbehälter oder einer Reinigungsstation gekoppelt ist, die mindestens zwei Pulverpumpen jeweils saugseitig mit dem Inneren des Pulverbehälters oder der Reinigungsstation verbunden sind.

Beispielsweise ist es denkbar, dass eine erste und mindestens eine weitere zweite Pumpeneinheit mit jeweils mindestens einer Pulverpumpe, insbesondere Dichtstrom- oder Dünnstrompulverpumpe, vorgesehen sind, wobei die Pumpeneinheiten unabhängig voneinander relativ zu den Pulverbehältern bewegbar sind derart,
- dass bedarfsweise die Saugseite der mindestens einen Pulverpumpe der ersten Pumpeneinheit und die Saugseite der mindestens einen Pulverpumpe der mindestens einen zweiten Pumpeneinheit strömungsmäßig entweder mit dem Inneren des ersten Pulverbehälters oder mit dem Inneren des mindestens einen zweiten Pulverbehälters verbunden oder verbindbar sind; und/oder
- dass bedarfsweise die Saugseite der mindestens einen Pulverpumpe der ersten Pumpeneinheit strömungsmäßig mit dem Inneren eines ersten der mindestens zwei Pulverbehälter und die Saugseite der mindestens einen Pulverpumpe der zweiten Pumpeneinheit strömungsmäßig mit dem Inneren des anderen der mindestens zwei Pulverbehälter verbunden oder verbindbar sind.

In einer Weiterbildung der zuletzt genannten Ausführungsform des erfindungsgemäßen Mehrfarbenpulverzentrums sind die erste und die mindestens eine weitere zweite Pumpeneinheit relativ zueinander und relativ zu den Pulverbehältern in mindestens einer horizontalen Richtung bewegbar. Alternativ oder zusätzlich hierzu kann vorgesehen sein, dass der erste und der mindestens eine zweite Pulverbehälter relativ zueinander und relativ zu der ersten und der mindestens einen zweiten Pumpeneinheit in mindestens einer horizontalen Richtung bewegbar sind.

In einer denkbaren Realisierung des erfindungsgemäßen Mehrfarbenpulverzentrums ist eine Vielzahl von in einer Matrix zueinander angeordneten Pulverbehältern vorgesehen, wobei die mindestens eine Pumpeneinheit in einer ersten horizontalen Richtung und in einer zur ersten horizontalen Richtung orthogonalen zweiten horizontalen Richtung derart relativ zu den Pulverbehältern bewegbar ist, dass bedarfsweise die Saugseite der mindestens einen Pulverpumpe strömungsmäßig mit dem Inneren eines Pulverbehälters der Vielzahl der Pulverbehältern verbunden oder verbindbar ist.

Alternativ hierzu kann eine Vielzahl von in einer Matrix zueinander angeordneten Pulverbehältern vorgesehen sein, wobei die Pulverbehälter in einer ersten horizontalen Richtung und in einer zur ersten horizontalen Richtung orthogonalen zweiten horizontalen Richtung derart relativ zu der mindestens einen Pumpeneinheit bewegbar sind, dass bedarfsweise die Saugseite der mindestens einen Pulverpumpe strömungsmäßig mit dem Inneren eines Pulverbehälters der Vielzahl der Pulverbehältern verbunden oder verbindbar ist.

Alternativ hierzu kann eine Vielzahl von in einer Matrix zueinander angeordneten Pulverbehältern vorgesehen sein, wobei die Pulverbehälter in einer ersten horizontalen Richtung und die mindestens eine Pumpeneinheit in einer zur ersten horizontalen Richtung orthogonalen zweiten horizontalen Richtung derart bewegbar sind, dass bedarfsweise die Saugseite der mindestens einen Pulverpumpe strömungsmäßig mit dem Inneren eines Pulverbehälters der Vielzahl der Pulverbehältern verbunden oder verbindbar ist.

Gemäß einem weiteren Aspekt der vorliegenden Offenbarung weist die Pumpeneinheit eine Andockeinheit auf, über welche die Saugseite der mindestens einen Pulverpumpe bedarfsweise mit dem Inneren eines der Pulverbehälter strömungsmäßig verbindbar ist. In diesem Zusammenhang ist es denkbar, dass der Andockeinheit eine Vertikalführungseinheit zugeordnet ist, mit welcher die Andockeinheit in vertikaler Richtung relativ zu der mindestens einen Pulverpumpe der Pumpeneinheit und den Pulverbehältern bedarfsweise bewegbar ist.

Die Erfindung betrifft ferner ein Mehrfarbenpulverzentrum zum bedarfsweisen Versorgen von mindestens einer Pulversprüheinrichtung mit Beschichtungspulver unterschiedlicher Art, wobei das Mehrfarbenpulverzentrum mindestens einen Pulverbehälter zur Aufnahme von Beschichtungspulver und eine Pumpeneinheit aufweist mit mindestens einer Pulverpumpe, insbesondere Dichtstrom- oder Dünnstrompulverpumpe, deren Druckseite strömungsmäßig mit dem Pulvereinlass einer Pulversprüheinrichtung verbunden oder verbindbar ist. Gemäß diesem Aspekt der Erfindung ist vorgesehen, dass der Pumpeneinheit eine Andockeinheit zugeordnet ist, über welche die Saugseite der mindestens einen Pulverpumpe bedarfsweise mit dem Inneren des Pulverbehälters strömungsmäßig verbindbar ist.

Vorzugsweise ist die Andockeinheit in vertikaler Richtung relativ zu der Pumpeneinheit sowie relativ zu dem Pulverbehälter bedarfsweise bewegbar zum strömungsmäßigen Verbinden oder strömungsmäßigen Trennen der Saugseite der mindestens einen Pulverpumpe mit bzw. von dem Inneren des Pulverbehälters.

Beispielsweise kann der Pulverbehälter mindestens einen vorzugsweise in einem Ansaugrohr ausgebildeten Ansaugkanal aufweisen, welcher eine in das Innere des Pulverbehälters mündende Ansaugöffnung und eine gegenüberliegende Abgabeöffnung aufweist, welche in einem Anschluss mündet, wobei die Saugseite der mindestens einen Pulverpumpe über die Andockeinheit strömungsmäßig mit dem Anschluss des Pulverbehälters verbindbar ist. In diesem Zusammenhang ist es denkbar, dass der Anschluss in einem oberen Bereich und insbesondere in einem Deckelbereich des Pulverbehälters angeordnet ist, und zwar derart, dass der Anschluss über die Andockeinheit mit der Saugseite der mindestens einen Pulverpumpe der Pumpeneinheit strömungsmäßig verbindbar ist.

Gemäß Ausführungsformen weist die Andockeinheit einen der Saugseite der mindestens einen Pumpeneinheit zugeordneten ersten Anschluss und mindestens einen dem Pulverbehälter zugeordneten zweiten Anschluss auf, wobei der erste Anschluss über einen Leitungsabschnitt strömungsmäßig mit dem zweiten Anschluss verbunden ist, und wobei der Leitungsabschnitt derart flexibel ausgeführt ist, dass der zweite Anschluss relativ zu dem ersten Anschluss über eine vorab festgelegte Wegstrecke bewegbar ist. Die vorab festgelegte Wegstrecke entspricht insbesondere zumindest im Wesentlichen einem vertikalen Abstand zwischen dem zweiten Anschluss der Andockeinheit und einem Anschluss des Pulverbehälters.

Gemäß Ausführungsformen der erfindungsgemäßen Andockeinheit ist der zweite Anschluss der Andockeinheit derart komplementär zu einem Anschluss des Pulverbehälters ausgeführt, dass dieser mit dem Anschluss des Pulverbehälters so verbindbar ist, dass die mindestens eine Pulverpumpe der Pumpeneinheit strömungsmäßig mit einer entsprechenden Ansaugöffnung eines dem Pulverbehälter zugeordneten Ansaugkanals verbindbar ist. Beispielsweise sind/ist der zweite Anschluss der Andockeinheit und/oder der Anschluss des Pulverbehälters als vorzugsweise selbstschließende Schlauchkupplung, insbesondere Bajonettkupplung, ausgeführt.

Denkbar ist, dass ferner eine Reinigungsstation vorgesehen ist zum bedarfsweisen Reinigen der mindestens einen Pumpeneinheit und/oder eines von der Pumpeneinheit zu mindestens einer Pulversprüheinrichtung führenden Leitungssystems und/oder mindestens einer Pulversprüheinrichtung, insbesondere bei einem Wechsel von einer ersten Pulverart auf eine hiervon verschiedene zweite Pulverart. Die der Pumpeneinheit zugeordnete Andockeinheit ist vorzugsweise ausgebildet, bedarfsweise die Saugseite der mindestens einen Pulverpumpe mit einem Reinigungsanschluss der Reinigungsstation strömungsmäßig zu verbinden.

Gemäß Ausführungsformen der erfindungsgemäßen Andockeinheit sind/ist die Andockeinheit und/oder der mindestens eine Pulverbehälter relativ zueinander vorzugsweise in vertikaler Richtung bewegbar. In diesem Zusammenhang bietet es sich an, wenn der Andockeinheit eine Vertikalführungseinheit zugeordnet ist zum bedarfsweisen Bewegen der Andockeinheit oder Teilen hiervon in vertikaler Richtung.

Die Erfindung betrifft ferner ein Mehrfarbenpulverzentrum zum bedarfsweisen Versorgen von mindestens einer Pulversprüheinrichtung mit Beschichtungspulver unterschiedlicher Art, wobei das Mehrfarbenpulverzentrum mindestens einen Pulverbehälter zur Aufnahme von Beschichtungspulver und mindestens eine Pumpeneinheit mit mindestens einer Pulverpumpe, insbesondere Dichtstrom- oder Dünnstrompulverpumpe aufweist, deren Druckseite strömungsmäßig mit dem Pulvereinlass einer Pulversprüheinrichtung verbunden oder verbindbar ist. Gemäß diesem Aspekt ist insbesondere vorgesehen, dass der mindestens eine Pulverbehälter mindestens ein vorzugsweise in einem Ansaugrohr ausgebildeten Ansaugkanal aufweist, welcher eine in das Innere des Pulverbehälters mündende Ansaugöffnung und eine gegenüberliegende Abgabeöffnung aufweist, welche in einem Anschluss mündet, wobei die Saugseite der mindestens einen Pulverpumpe strömungsmäßig mit dem Anschluss des Pulverbehälters verbindbar ist.

Denkbar in diesem Zusammenhang ist es, dass der Anschluss in einem oberen Bereich und insbesondere in einem Deckelbereich des Pulverbehälters angeordnet ist, und zwar derart, dass der Anschluss mit der Saugseite der mindestens einen Pulverpumpe der Pumpeneinheit strömungsmäßig verbindbar ist.

Der mindestens eine Ansaugkanal ist in einem in das Innere des mindestens einen Pulverbehälters hineinragenden Tauchrohr oder in einer Seitenwand des mindestens einen Pulverbehälters ausgebildet.

Gemäß Ausführungsformen des erfindungsgemäßen Mehrfarbenpulverzentrums weist der mindestens eine Pulverbehälter eine im Wesentlichen quaderförmige oder zylinderförmige Pulverkammer für Beschichtungspulver und eine Fluidisiereinrichtung zum Einleiten von Fluidisierdruckluft in die Pulverkammer auf. In einer Seitenwand oder in einem Deckel des mindestens einen Pulverbehälters kann mindestens eine in das Innere des Pulverbehälters mündende Einlassöffnung vorgesehen sein zum bedarfsweisen Zuführen von Beschichtungspulver in einem Pulverbeschichtungsbetrieb des Mehrfarbenpulverzentrums oder wahlweise zum Einleiten von Reinigungsdruckluft in einem Reinigungsbetrieb des Mehrfarbenpulverzentrums bzw. des mindestens einen Pulverbehälters.

Von Vorteil ist, wenn ferner mindestens ein aus dem Inneren des mindestens einen Pulverbehälters herausführender Auslass vorgesehen ist zum Abführen von in die Pulverkammer des mindestens einen Pulverbehälters eingeleiteter Fluidisierdruckluft oder wahlweise zum Abführen von in einem Reinigungsbetrieb in die Pulverkammer eingeleiteter Reinigungsluft gegebenenfalls zusammen mit von der Reinigungsdruckluft mit transportiertem Restpulver.

Die Pulverkammer des mindestens einen Pulverbehälters weist vorzugsweise mindestens einen Fluidisierdruckluftauslass mit einer Auslassöffnung auf zum Abführen der in die Pulverkammer eingeleiteten Fluidisierdruckluft. Der Fluidisierdruckluftauslass kann eine Entlüftungsleitung aufweisen, welche außerhalb des Pulverbehälters mit einem Steigrohr verbunden oder verbindbar ist zum Verhindern eines Pulveraustrags aus der Pulverkammer des mindestens einen Pulverbehälters in einem Pulverbeschichtungsbetrieb des Mehrfarbenpulverzentrums. Denkbar in diesem Zusammenhang ist, wenn der mindestens eine Fluidisierdruckluftauslass eine Entlüftungsleitung aufweist, welcher einerseits mit der Auslassöffnung des Fluidisierdruckluftauslasses verbunden oder verbindbar ist und andererseits in einen Absaugtrichter einer vorzugsweise als Luftmengenverstärker ausgebildeten Absauganlage mündet.

Vorzugsweise ist ferner mindestens ein Niveausensor vorgesehen zum Detektieren von mindestens einem Pulverniveau im Inneren des mindestens einen Pulverbehälters. Der mindestens eine Niveausensor ist insbesondere ein berührungslos arbeitender Niveausensor, welcher außerhalb des Pulverbehälters getrennt vom Inneren des Pulverbehälters angeordnet ist.

Die Pulverbehälter können fixe, aneinandergereihte selbstreinigende Behältnisse sein oder einzelne bewegbare oder mobile Pulverbehälter. In diesem Zusammenhang ist es insbesondere denkbar, wenn die Pulverbehälter in einem automatischen Pulverzubringersystem eingebunden sind, so dass den Pulverbehältern automatisch oder wahlweise automatisch bei Bedarf entsprechendes Beschichtungspulver zugeführt werden kann. Das Pulverzubringersystem kann beispielsweise als Paternostersystem ausgeführt sein.

Jeder Pulverbehälter kann mit folgenden Funktionen ausgestattet sein:
- Niveausonde zur Füllstandsüberwachung und entsprechender Kommunikation;
- Fluidisierung bzw. Vorkonditionierung des Pulvers bei Pulvertypwechsel, damit sofort nach dem Andocken das Pulver gefördert wird;
- Integration eine Siebes;
- Integration einer Vibrationseinheit;
- Sensorik zur Erfassung der korrekten Positionierung des Pulverbehälters;
- Codeplatte, Barcode, RFID Karte, oder dergleichen zur Erfassung und/oder Identifikation des Pulverbehälters bzw. dessen Inhalts;
- Anbindung an ein größeres Frischpulverbehältnis (z.B. BigBag Station) außerhalb des Mehrfarbenzentrums zum automatischen Nachfüllen von Pulver; und/oder
- Anbindung an ein Pulverrückführungssystem.

In diesem Zusammenhang ist es denkbar, wenn dem Mehrfarbenpulverzentrum ein Recoverypulver-Rückführsystem zugeordnet ist zum bedarfsweisen Rückführen von Recoverypulver in den ersten Pulverbehälter und/oder in den mindestens einen zweiten Pulverbehälter. Das Recoverypulver-Rückführsystem kann mindestens eine Rückführleitung insbesondere in Gestalt eines Rückführschlauches aufweisen, welcher insbesondere bedarfsweise strömungsmäßig mit einer Pulverbeschichtungskabine oder Beschichtungsarbeitsplatz einerseits und dem ersten Pulverbehälter und/oder in dem mindestens einen zweiten Pulverbehälter verbunden oder verbindbar ist zum Rückführen von Recoverypulver in den entsprechenden Pulverbehälter. Die mindestens eine Rückführleitung ist vorzugsweise an einer Wagen- oder Schlittenanordnung relativ zu dem ersten Pulverbehälter und/oder dem mindestens einen zweiten Pulverbehälter bewegbar, insbesondere horizontal bewegbar.

Ferner kann die mindestens eine Rückführleitung relativ zu dem ersten Pulverbehälter und/oder dem mindestens einen zweiten Pulverbehälter bewegbar, insbesondere vertikal bewegbar sein zum Ausbilden einer strömungsmäßigen Verbindung mit dem entsprechenden Pulverbehälter.

Gemäß Ausführungsformen ist dem Mehrfarbenpulverzentrum ein Pulverbehälter-Entlüftungssystem zugeordnet zum bedarfsweisen Entlüften des ersten Pulverbehälters und/oder des mindestens einen zweiten Pulverbehälters. Das Pulverbehälter-Entlüftungssystem kann mindestens eine Entlüftungsleitung insbesondere in Gestalt eines Entlüftungsschlauches aufweisen, welcher insbesondere bedarfsweise oder dauerhaft strömungsmäßig mit dem ersten Pulverbehälter und/oder dem mindestens einen zweiten Pulverbehälter verbunden ist zum Entlüften des entsprechenden Pulverbehälters. Auch hier ist es von Vorteil, wenn die mindestens eine Entlüftungsleitung an einer Wagen- oder Schlittenanordnung relativ zu dem ersten Pulverbehälter und/oder dem mindestens einen zweiten Pulverbehälter bewegbar, insbesondere horizontal bewegbar ist.

Die Pulverbehältergröße liegt vorzugsweise bei 5 bis 150 Liter, je nach Behältertyp.

Weitere Pulverbereitstellungen wie Vorrichtungen um direkt ab Pulverbox oder Pulvertonne zu fördern sind denkbar.

Gemäß Ausführungsformen der bei dem erfindungsgemäßen Mehrfarbenzentrum zum Einsatz kommenden Pulverbehälter sind diese jeweils mit einer Vibrationssiebvorrichtung für Sprühbeschichtungspulver ausgerüstet. Die Vibrationssiebvorrichtung kann ein Sieb und einen Vibrator zum Vibrieren des Siebes aufweisen. Beispielsweise ist der Vibrator als Druckluftvibrator oder Ultraschallsieb ausgeführt.

In einer Weiterbildung ist insbesondere ferner mindestens eine Einrichtung zum Messen des im Inneren des mindestens einen Pulverbehälters herrschenden Luftdruckes vorgesehen.

In diesem Zusammenhang ist es von Vorteil, wenn:
- die Menge einer pro Zeiteinheit dem mindestens einen Pulverbehälter zugeführten Fluidisierdruckluft in Abhängigkeit von dem im Inneren des mindestens einen Pulverbehälters herrschenden Luftdruck vorzugsweise automatisch einstellbar ist; und/oder
- die Menge einer pro Zeiteinheit dem mindestens einen Pulverbehälter zugeführten Reinigungsdruckluft in Abhängigkeit von dem im Inneren des mindestens einen Pulverbehälters herrschenden Luftdruck vorzugsweise automatisch einstellbar ist; und/oder
- die Menge einer pro Zeiteinheit aus dem mindestens einen Pulverbehälter abgeführten Fluidisierdruckluft in Abhängigkeit von dem im Inneren des mindestens einen Pulverbehälters herrschenden Luftdruck vorzugsweise automatisch einstellbar ist; und/oder
- die Menge einer pro Zeiteinheit über mindestens einen Restpulverauslass abgeführten Reinigungsdruckluft in Abhängigkeit von dem im Inneren des mindestens einen Pulverbehälters herrschenden Luftdruck vorzugsweise automatisch einstellbar ist.

Im Folgenden werden unter Bezugnahme auf die beiliegenden Zeichnungen exemplarische Ausführungsformen der erfindungsgemäßen Lösung beschrieben.

In den Zeichnungen zeigen:
- FIG. 1a: schematisch und in einer isometrischen Ansicht eine erste exemplarische Ausführungsform des erfindungsgemäßen Mehrfarbenpulverzentrums;
- FIG. 1b: schematisch und in einer isometrischen Ansicht eine zweite exemplarische Ausführungsform des erfindungsgemäßen Mehrfarbenpulverzentrums;
- FIG. 2a: schematisch und in einer isometrischen Ansicht eine Detaillansicht einer bei der exemplarischen Ausführungsform gemäß FIG. 1a zum Einsatz kommenden Pumpeneinheit;
- FIG. 2b: schematisch und in einer isometrischen Ansicht eine Detaillansicht einer bei der exemplarischen Ausführungsform gemäß FIG. 1b zum Einsatz kommenden Pumpeneinheit;
- FIG. 3a: schematisch und in einer isometrischen Ansicht eine weitere Detaillansicht einer bei der exemplarischen Ausführungsform gemäß FIG. 1a zum Einsatz kommenden Pumpeneinheit;
- FIG. 3b: schematisch und in einer isometrischen Ansicht eine weitere Detaillansicht einer bei der exemplarischen Ausführungsform gemäß FIG. 1b zum Einsatz kommenden Pumpeneinheit;
- FIG. 4: schematisch und in einer Seitenansicht die Pumpeneinheit gemäß FIG. 2b;
- FIG. 5a-d: schematisch weitere exemplarische Ausführungsformen des erfindungsgemäßen Mehrfarbenpulverzentrums;
- FIG. 6: schematisch und in einer isometrischen Ansicht eine dritte exemplarische Ausführungsform des erfindungsgemäßen Mehrfarbenpulverzentrums (ohne Pulverbehälter); und
- FIG. 7: schematisch und in einer isometrischen Ansicht eine Detaillansicht einer bei der exemplarischen Ausführungsform gemäß FIG. 6 zum Einsatz kommenden Pumpeneinheit.

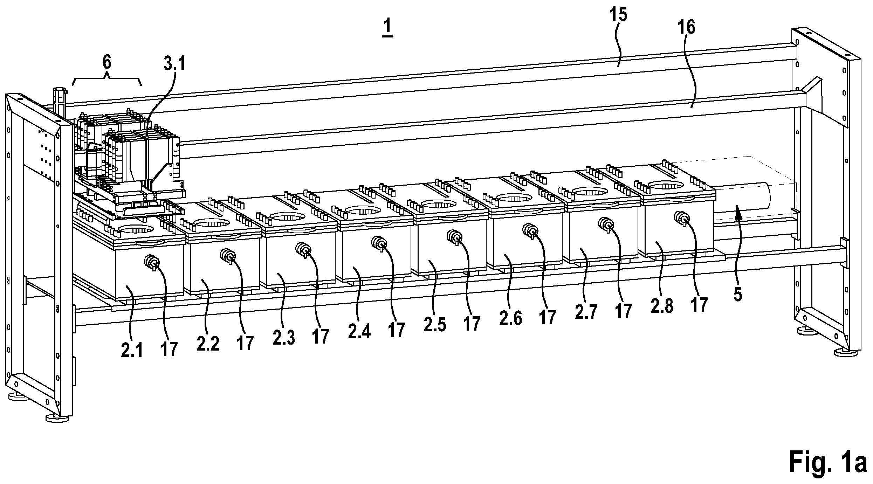

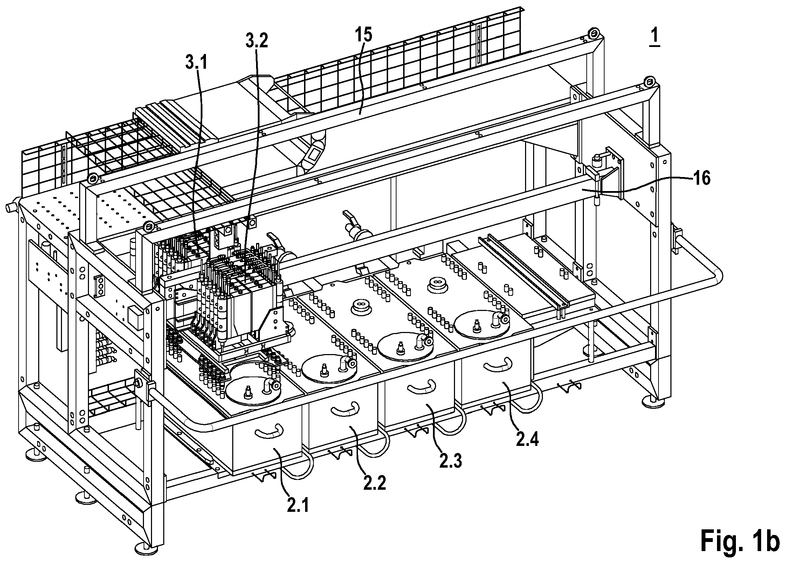

In FIG. 1a und FIG. 1b sind jeweils schematisch und in einer isometrischen Ansicht exemplarische Ausführungsformen des erfindungsgemäßen Mehrfarbenpulverzentrums 1 dargestellt.

Kurz zusammengefasst weisen die exemplarische Ausführungsformen dieses Mehrfarbenpulverzentrums 1 jeweils eine Vielzahl (bei FIG. 1a beispielsweise acht) Pulverbehältern 2.1-2.8 auf, welche ausgebildet sind, Beschichtungspulver unterschiedlicher Art aufzunehmen. Gemäß der dargestellten Ausführungsform weist jeder der Vielzahl der Pulverbehälter 2.1-2.8 eine im Wesentlichen quaderförmige Pulverkammer auf zur Aufnahme von entsprechendem Beschichtungspulver.

Der Aufbau der exemplarischen Ausführungsformen des erfindungsgemäßen Mehrfarbenpulverzentrums 1 besteht im Einzelnen aus einem Gestell 15 mit mehreren nebeneinander angeordneten Pulverbehältern 2.1-2.8 und einem oberhalb der Pulverbehälter 2.1-2.8 sich bewegenden Wagen (Wagen-/Schlittenanordnung 6), bestehend aus mehreren zu einer Pumpeneinheit 3.1-3.6 zusammengefassten Pulverpumpen 4 (hier: Dichtstrompumpen) und einer sich vertikal bewegenden Andockeinheit 8 mit entsprechender Andockplatte 9.

Die Pulverbehälter 2.1-2.8 sind üblicherweise mit unterschiedlichen Pulversorten gefüllt. Die Pulverbehälter 2.1-2.8 sind aus der Behälterreihe entnehmbar ausgeführt. Führungen und dergleichen sorgen dafür, dass die Position des Pulverbehälters zentriert und indexiert ist. Alle Pulverbehälter 2.1-2.8 sind mit einer zentralen Absaugvorrichtung verbunden, welche einen Überdruck in den Pulverbehältern 2.1-2.8, hervorgerufen durch einen Fluidisierungsprozess des Pulvers, entlüftet. Der Deckel 11 eines jeden Pulverbehälters 2.1-2.8 hat nebst seiner Deckelfunktion integrierte Ansaugrohre mit am oberen Ende platzierten Andockschnittstellen (Anschlüsse 10).

Der angetriebene und genau positionierbare Wagen (Wagen-/Schlittenanordnung 6) mit der Pumpeneinheit 3.1-3.6 und der Andockeinheit 8 fährt längs einer Führungsschiene 16 entlang, und positioniert sich genau oberhalb eines Pulverbehälters 2.1-2.8. Eine vertikale Bewegung der gesamten Andockplatte 9 der Andockeinheit 8 verbindet die Ansaugseiten der Pulverpumpen 4 mit den Ansaugrohren der Pulverbehälter 2.1-2.8. Letzteres ist vorzugsweise eine selbstzentrierende Konstruktion.

Obwohl in den Zeichnungen nicht gezeigt, können so mehrere Pulversprühpistolen gleichzeitig mit dem einen Pulverbehälter 2.1-2.8 verbunden werden. Danach starten die Pulverpumpen 4 mit der Förderung des Pulvers aus dem Pulverbehälter 2.1-2.8 in Richtung der Pistolen.

Bei einem Wechsel des Pulvers (Farbwechsel), dockt sich die Mechanik vom "alten" Pulverbehälter 2.1-2.8 ab und der Wagen (Wagen-/Schlittenanordnung 6) fährt in eine Reinigungsposition, in welcher eine Reinigung, ausgeführt durch mehrere pneumatische Ventile, der pulverführenden Komponenten (in Richtung Pistole wie auch Ansaugschlauch) erfolgt. Danach wird der "neue" Pulverbehälter 2.1-2.8 angefahren.

Die konstante Pulverförderqualität wird mit den Vorzügen insbesondere einer Dichtstrompumpe und deren Integration mit kürzest möglichen Ansaugstrecken in das System erreicht.

In FIG. 1a ist ein Ausführungsbeispiel mit insgesamt acht Pulverbehältern 2.1-2.8 gezeigt. Denkbar ist auch eine Anwendung mit weniger, bis zu nur zwei Pulverbehältern. So ist beispielsweise in FIG. 1b ein Ausführungsbeispiel mit insgesamt vier Pulverbehältern 2.1-2.4 gezeigt.

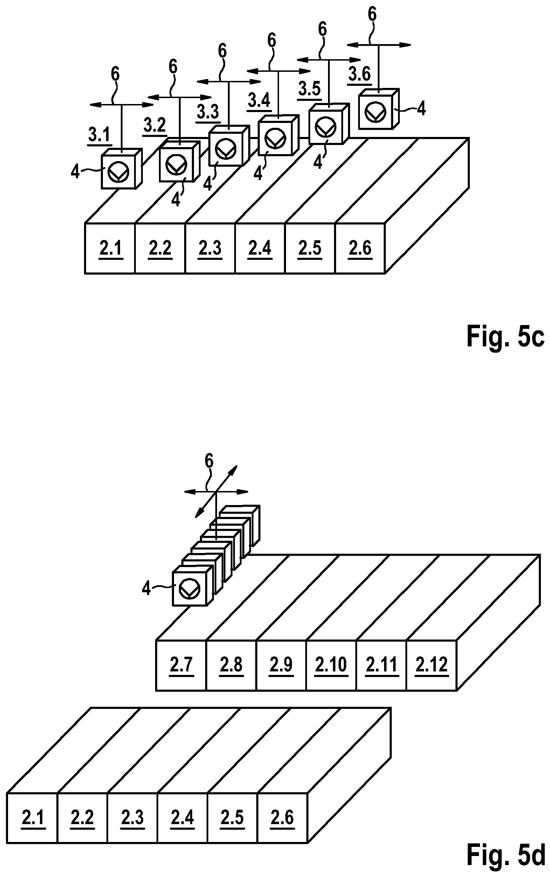

Insbesondere bei mehr als beispielsweise zehn Pulverbehältern kann eine zweite und weitere Reihe parallel zur ersten Behälterreihe aufgestellt werden (vgl. FIG. 5d. Die Behälterreihen sind in diesem Fall auf einem eigenständigen Support am Boden befestigt und das Gestell 15 mit dem Wagen (Wagen-/Schlittenanordnung 6) wird zum Portal, d.h. es wird mit einem weiteren Antrieb ausgestattet und verfährt in X-Richtung zur entsprechenden Behälterreihe.

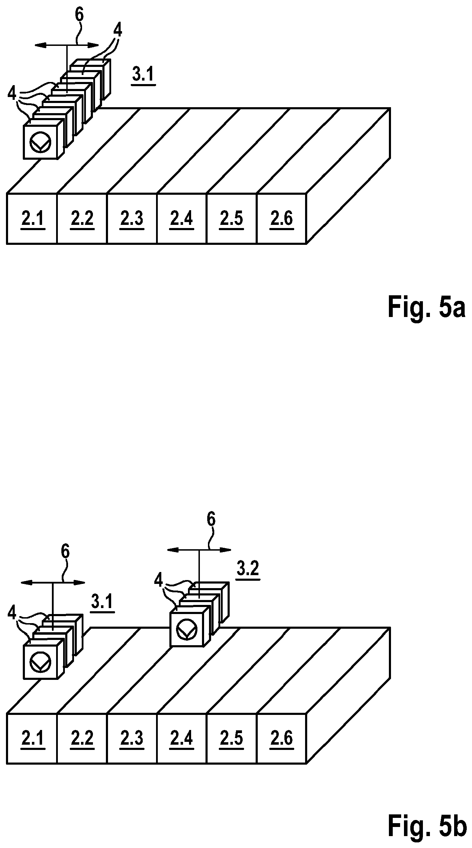

Die in FIG. 5a schematisch gezeigte Variante ist gemäß dem Entwurf gemäß FIG. 1, bei welchem sich eine Pumpeneinheit 3.1 (bzw. Pistole) einer einzigen Pulversorte bedient. Dafür ist eine (einzige) Schlittenanordnung 6 nötig.

Die in FIG. 5b schematisch gezeigte Variante erlaubt Gruppen zu bilden: eine erste Gruppe von Pumpeneinheiten 3.1 bzw. eine erste Pumpeneinheit 3.1 bedient sich einer Pulversorte und eine weitere Gruppe von Pumpeneinheiten 3.2 bzw. eine weitere Pumpeneinheit 3.2 bedient sich gleichzeitig von einer anderen oder gleichen Pulversorte. Dazu sind in diesem Beispiel zwei Schlittenanordnungen 6 nötig. Der praktische Anwendungsfall dahinter ist z.B. zwei Kabinensprühstände mit einem Mehrfarbenpulverzentrum 1 zu versorgen

Bei der in FIG. 5c schematisch gezeigten Variante kann jede einzelne Pumpeneinheit 3.1-3.6 (bzw. Pistole) einer individuellen Pulversorte zugeordnet werden. Dazu ist für jede Pumpeneinheit 3.1-3.6 eine Schlittenanordnung 6 nötig. Beim praktischen Anwendungsfall werden dafür üblicherweise Handpistolen eingesetzt für die Beschichtung von Kleinstmengen (z.B. einzelne Metallmöbelteile, welche nach dem FIFO Prinzip abgearbeitet werden und daher unterschiedliche Farbanforderungen haben)

Für eine große Anzahl an Pulverbehältern 2.1-2.12 bzw. Pulvertypen lässt die in FIG. 5d schematisch gezeigte zusätzlich die komplette Pumpeneinheit 3.1 zu einer weiteren Pulverbehälterreihe fahren.

Obwohl in den Zeichnungen nicht dargestellt, kann in einer Seitenwand eines jeden Pulverbehälters 2.1-2.12 mindestens ein Reinigungsdrucklufteinlass vorgesehen sein, an welchem in einem Reinigungsbetrieb des Pulverbehälters 2.1-2.12 zum Entfernen von Restpulver aus der entsprechenden Pulverkammer über eine Druckluftleitung eine Druckluftquelle anschließbar ist, um Reinigungsdruckluft in die Pulverkammer einzuleiten. Ferner ist es denkbar, dass an der bereits genannten Seitenwand oder Boden des entsprechenden Pulverbehälters 2.1-2.12 ein Restpulverauslass vorgesehen ist, welcher eine Auslassöffnung aufweist, über die mit Hilfe der in die Pulverkammer eingeleiteten Reinigungsdruckluft im Reinigungsbetrieb des Pulverbehälters 2.1-2.12 Restpulver aus der Pulverkammer heraustreibbar ist.

Die jeweiligen Pulverbehälter 2.1-2.12 der in den Zeichnungen dargestellten exemplarischen Ausführungsform des erfindungsgemäßen Mehrfarbenpulverzentrums 1 weisen vorzugsweise ferner eine Einlassöffnung zum bedarfsweisen Zuführen von Frischpulver und/oder Recovery Pulver auf. Selbstverständlich ist es in diesem Zusammenhang auch denkbar, für Frischpulver und Recovery Pulver jeweils einen separaten Pulvereinlass vorzusehen.

Vorzugsweise sind den jeweiligen Pulverbehältern 2.1-2.12 der exemplarischen Ausführungsform des erfindungsgemäßen Mehrfarbenpulverzentrums 1 jeweils eine Fluidisiereinrichtung zum Einleiten von Fluidisierdruckluft in die entsprechende Pulverkammer zugeordnet. Die Fluidisierdruckluft kann durch eine Stirnwand, Seitenlängswand, Bodenwand oder Deckwand in die entsprechende Pulverkammer eingeleitet werden. Insbesondere bietet es sich an, die Bodenwand der entsprechenden Pulverkammer als Fluidisierboden auszubilden. Der Fluidisierboden sollte eine Vielzahl von offenen Poren oder kleinen Durchgangsöffnungen aufweisen, durch welche Fluidisierdruckluft aus einer unterhalb der Bodenwand angeordneten Fluidisierdruckluftkammer nach oben in die entsprechende Pulverkammer strömen kann, um darin das Beschichtungspulver beim Pulverbeschichtungsbetrieb des Mehrfarbenpulverzentrums 1 in einen Schwebezustand zu versetzen (d. h. zu Fluidisieren), damit es mit Hilfe von einer Pulverabgabeeinrichtung in Gestalt einer Pumpeneinheit 3.1-3.6 leicht absaugbar ist. Die Fluidisierdruckluft wird der Fluidisierdruckluftkammer durch einen Fludisierdrucklufteinlass zugeführt.

Damit bei Betrieb der Fluidisiereinrichtung der Druck innerhalb der entsprechenden Pulverkammer nicht einen vorab festgelegten oder festlegbaren Maximaldruck überschreitet, weist jede Pulverkammer des Mehrfarbenpulverzentrums 1 mindesten einen Fluidisierdruckluftauslass mit einer Auslassöffnung auf zum Abführen der in die Pulverkammer eingeleiteten Fluidisierdruckluft und zum Bewirken eines Druckausgleiches. Insbesondere sollte die Auslassöffnung des mindestens einen Fluidisierdruckluftauslasses einer jeden Pulverkammer der Vielzahl der Pulverbehälter 2.1-2.12 derart dimensioniert sein, dass beim Betrieb der Fluidisiereinrichtung in der entsprechenden Pulverkammer gegenüber dem Atmosphärendruck maximal ein Überdruck von 0,5 bar herrscht.

Auch kann an der Auslassöffnung ein Ventil oder dergleichen angebracht sein, um nur die unter Fluidisierungsdruck stehenden Pulverbehälter zu entlüften.

Zum Abführen der in die jeweiligen Pulverkammern der Pulverbehälter 2.1-2.12 eingeführten Fluidisierdruckluft ist vorzugsweise eine zentrale, die Pulverkammern verbindende Entlüftungsleitung vorgesehen, welche zu einer zentralen Absauganlage führt.

Bei der in FIG. 1a schematisch dargestellten exemplarischen Ausführungsform weist jeder Pulverbehälter 2.1-2.8 einen vorzugsweise berührungslos arbeitenden Niveausensor 17 auf, um das maximal zulässige Pulverniveau in der entsprechenden Pulverkammer zu detektieren. Denkbar hierbei ist es, einen weiteren Niveausensor 17 vorzusehen, welcher im Hinblick auf den Pulverbehälter 2.1-2.12 derart angeordnet ist, um eine minimales Pulverniveau zu detektieren, und, sobald dieses minimale Pulverniveau erreicht bzw. unterschritten wird, eine entsprechende Meldung an ein Steuergerät abzugeben, um der entsprechenden Pulverkammer vorzugsweise automatisch Frischpulver oder Recovery Pulver über eine Einlassöffnung zuzuführen.

Vorzugsweise ist der Niveausensor 17 zum Detektieren des Pulverniveaus in der entsprechenden Pulverkammer ein berührungslos arbeitender Niveausensor 17 und außerhalb der Pulverkammer getrennt von ihr angeordnet. Dadurch wird eine Verschmutzung des Niveausensors 17 verhindert. Der Niveausensor 17 erzeugt ein Signal, wenn das Pulverniveau eine bestimmte Höhe erreicht hat. Es können auch mehrere solche Pulverniveausensoren auf verschiedenen Höhen angeordnet sein, beispielsweise zum Detektieren von vorbestimmten maximalen Niveaus und zum Detektieren eines vorbestimmten minimalen Niveaus.

Die Signale des mindestens einen Niveausensors 17 werden vorzugsweise zum Steuern einer automatischen Pulverzufuhr von Beschichtungspulver durch entsprechende Pulvereinlässe in die entsprechenden Pulverkammern verwendet, um darin ein vorbestimmtes Niveau oder einen vorbestimmten Niveaubereich auch während der Zeitdauer aufrecht zu erhalten, während die Pumpeneinheit 3.1-3.6 Beschichtungspulver aus der entsprechenden Pulverkammer absaugt und pneumatisch zu Pulversprüheinrichtungen oder eine einzelne Pulversprüheinrichtung (oder in anderen Behältern) fördern.

Während eines solchen Pulversprühbeschichtungsbetriebes wird Reinigungsdruckluft nicht oder nur mit reduziertem Druck in die entsprechenden Pulverkammern geleitet.

Obwohl in den Zeichnungen nicht explizit dargestellt, ist es ferner denkbar, eine Einrichtung zum Messen oder Bestimmen des in den jeweiligen Pulverkammern herrschenden Luftdruckes vorzusehen. Dies ist insofern wichtig, in wie fern Sorge zu tragen ist, dass sich im Inneren der entsprechenden Pulverbehälter 2.1-2.12 durch das Einleiten von Fluidisierdruckluft im Pulverbeschichtungsbetrieb des Mehrfarbenpulverzentrums 1 kein zu hoher Überdruck aufbauen kann, da in der Regel die Pulverbehälter 2.1-2.12 nicht als Hochdruckbehälter ausgeführt sind. Insofern ist es bevorzugt, wenn der maximal in der Pulverkammer zulässige Überdruck den Wert von 0,5 bar nicht überschreitet.

Bei der zuletzt genannten Ausführungsform ist es insbesondere denkbar, dass der in der entsprechenden Pulverkammer der einzelnen Pulverbehälter 2.1-2.12 gemessene Luftdruck kontinuierlich oder zu vorgegebenen Zeiten bzw. Ereignissen einem Steuergerät zugeführt wird, wobei vorzugsweise automatisch die Menge die pro Zeiteinheit der Pulverkammer zugeführte Fluidisierdruckluft und/oder die Menge der pro Zeiteinheit aus der Pulverkammer über den mindestens einen Fluidisierdruckluftauslass abgeführten Fluidisierdruckluft in Abhängigkeit von dem in der Pulverkammer herrschenden Luftdruck eingestellt werden/wird. Im Reinigungsbetrieb des Mehrfarbenpulverzentrums 1 hingegen ist es bevorzugt, wenn mit Hilfe des Steuergerätes in Menge der pro Zeiteinheit der jeweiligen Pulverkammer zugeführten Reinigungsdruckluft und/oder die Menge der pro Zeiteinheit über den mindestens einen Restpulverauslass abgeführten Reinigungsdruckluft in Abhängigkeit von dem in der Pulverkammer herrschenden Luftdruck vorzugsweise automatisch eingestellt werden/wird.

Das erfindungsgemäße Mehrfarbenpulverzentrum 1, wie es gemäß einer exemplarischen Ausführungsform in den beiliegenden Zeichnungen gezeigt ist, weist mindestens eine Pumpeneinheit 3.1-3.6 auf. Bei der in den Zeichnungen exemplarisch dargestellten Ausführungsform umfasst die Pumpeneinheit 3.1-3.6 eine Vielzahl von Dichtstrompulverpumpen, die vorzugsweise individuell über das genannte Steuergerät ansteuerbar sind und jeweils einen Pulvereinlass zum bedarfsweisen Ansaugen von Beschichtungspulver aus einem der Pulverbehälter 2.1-2.12 sowie einen Pulverauslass aufweisen. Die jeweiligen Pulverlauslässe der Pulverpumpen 4 der Pumpeneinheit 3.1-3.6 sind strömungsmäßig mit jeweils einer Pulversprüheinrichtung verbunden oder verbindbar.

Wie schematisch dargestellt, ist der Pumpeneinheit 3.1-3.6 eine Wagen- oder Schlittenanordnung 6 zugeordnet, mit Hilfe welcher die Pumpeneinheit 3.1-3.6 in einer horizontalen Ebene und oberhalb der jeweiligen Pulverbehälter 2.1-2.12 relativ zu diesen geführt bewegbar ist. Zu diesem Zweck weist die der Pumpeneinheit 3.1-3.6 zugeordnete Wagen- oder Schlittenanordnung 6 einen entsprechenden Linearantrieb auf, der über das genannten Steuergerät ansteuerbar und im Hinblick auf die jeweiligen Pulverbehälter 2.1-2.12 des Mehrfarbenpulverzentrums 1 positionierbar ist.

Der Pumpeneinheit 3.1-3.6 ist ferner eine Vertikalführungseinheit zugeordnet, um bedarfsweise die Pumpeneinheit 3.1-3.6 bzw. Teile hiervon in vertikaler Richtung relativ zu den Pulverbehältern 2.1-2.12 des Mehrfarbenpulverzentrums 1 bewegen zu können.

Gemäß der in den Zeichnungen schematisch dargestellten Ausführungsform des erfindungsgemäßen Mehrfarbenpulverzentrums 1 weist die Pumpeneinheit 3.1-3.6 eine Andockeinheit 8 auf, über welche die Pulvereinlässe (Saugseiten) der zu der Pumpeneinheit 3.1-3.6 gehörenden Pulverpumpen 4 bedarfsweise mit dem Inneren eines der Pulverbehälter 2.1-2.12 strömungsmäßig verbindbar ist. Zu diesem Zweck ist der Andockeinheit 8 eine Vertikalführungseinheit zugeordnet, mit welcher die Andockeinheit 8 in vertikaler Richtung relativ zu den jeweiligen Pulverpumpen 4 der Pumpeneinheit 3.1-3.6 und den Pulverbehältern 2.1-2.12 bedarfsweise bewegbar ist.

Die Andockeinheit 8 ist in vertikaler Richtung relativ zu der Pumpeneinheit 3.1-3.6 sowie relativ zu dem Pulverbehälter 2.1-2.12 bedarfsweise bewegbar zum strömungsmäßigen Verbinden oder strömungsmäßigen Trennen der Saugseite der mindestens einen Pulverpumpe 4 mit bzw. von dem Inneren des Pulverbehälters 2.1-2.12.

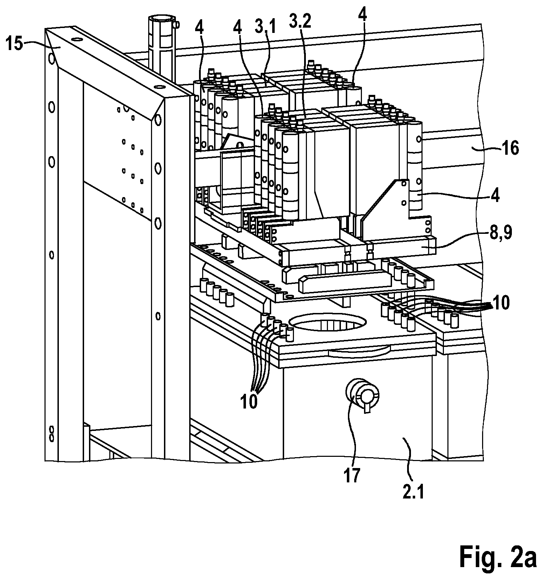

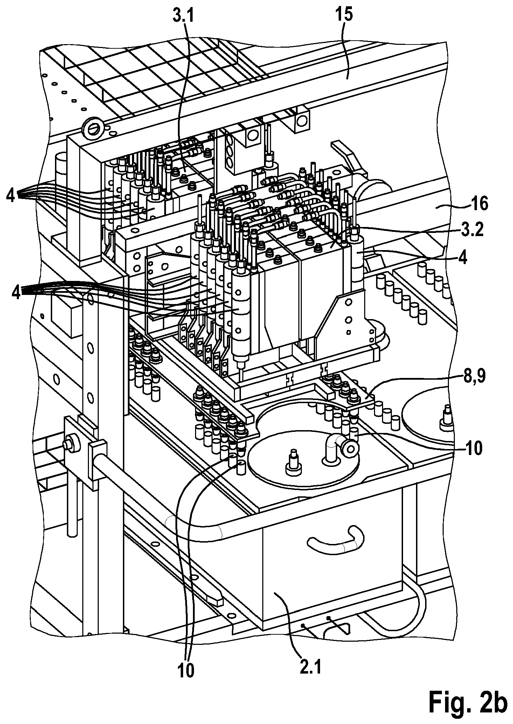

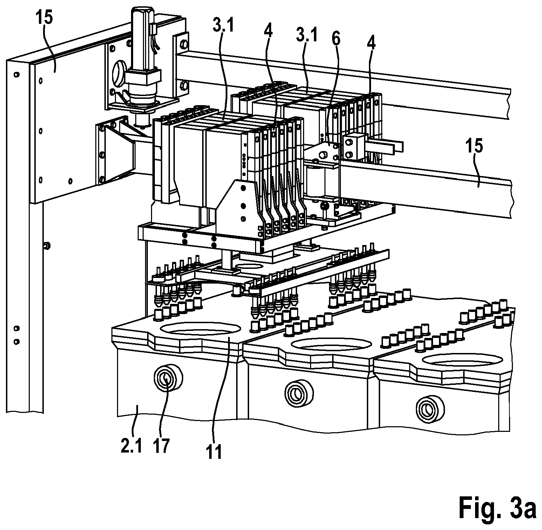

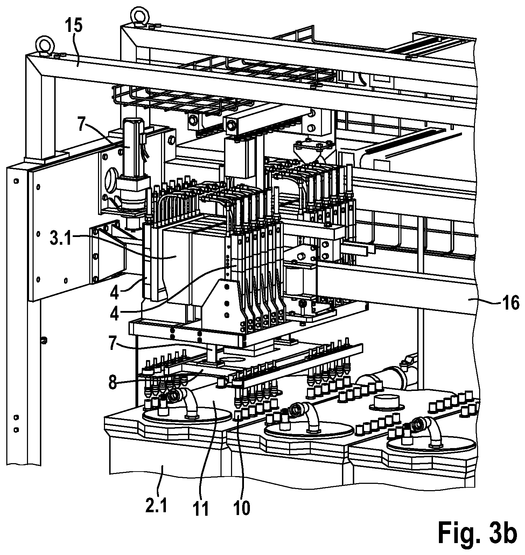

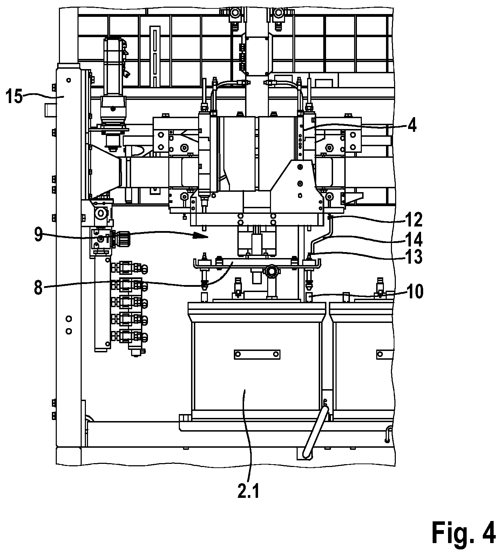

Wie es den Detaildarstellungen in FIGs. 2a bis 4 entnommen werden kann, weisen die Pulverbehälter 2.1-2.8 jeweils mindestens einen vorzugsweise in einem Ansaugrohr ausgebildeten Ansaugkanal aufweist, welcher eine in das Innere des Pulverbehälters 2.1-2.8 mündende Ansaugöffnung und eine gegenüberliegende Abgabeöffnung aufweist, welche in einem Anschluss 10 mündet, wobei die Saugseite der mindestens einen Pulverpumpe 4 über die Andockeinheit 8 strömungsmäßig mit dem Anschluss 10 des Pulverbehälters 2.1-2.12 verbindbar ist. Der Anschluss 10 ist in einem oberen Bereich und insbesondere in einem Deckelbereich 11 des Pulverbehälters 2.1-2.8 angeordnet, und zwar derart, dass der Anschluss 10 über die Andockeinheit 8 mit der Saugseite der mindestens einen Pulverpumpe 4 der Pumpeneinheit 3.1-3.6 strömungsmäßig verbindbar ist.

Wie dargestellt, weist die Andockeinheit 8 einen der Saugseite der mindestens einen Pumpeneinheit 3.1-3.6 zugeordneten ersten Anschluss 12 und mindestens einen dem Pulverbehälter 2.1-2.12 zugeordneten zweiten Anschluss 13 auf, wobei der erste Anschluss 12 über einen Leitungsabschnitt 14 strömungsmäßig mit dem zweiten Anschluss 13 verbunden ist, und wobei der Leitungsabschnitt 14 derart flexibel ausgeführt ist, dass der zweite Anschluss 13 relativ zu dem ersten Anschluss 12 über eine vorab festgelegte Wegstrecke bewegbar ist. Die vorab festgelegte Wegstrecke entspricht hier einem vertikalen Abstand zwischen dem zweiten Anschluss 13 der Andockeinheit 8 und einem Anschluss 10 des Pulverbehälters 2.1-2.12.

Der zweite Anschluss 13 der Andockeinheit 8 ist derart komplementär zu einem Anschluss 10 des Pulverbehälters 2.1-2.12 ausgeführt, dass dieser mit dem Anschluss 10 des Pulverbehälters 2.1-2.12 derart verbindbar ist, dass die mindestens eine Pulverpumpe 4 der Pumpeneinheit 3.1-3.6 strömungsmäßig mit einer entsprechenden Ansaugöffnung eines dem Pulverbehälter 2.1-2.12 zugeordneten Ansaugkanals verbindbar ist.

Insbesondere sind/ist der zweite Anschluss 13 der Andockeinheit 8 und/oder der Anschluss 10 des Pulverbehälters 2.1-2.12 als vorzugsweise selbstschließende Schlauchkupplung, insbesondere selbstzentrierende und dichtende Kupplung, ausgeführt.

Obwohl in den Zeichnungen nicht detailliert dargestellt, ist es von Vorteil, wenn ferner eine Reinigungsstation 5 vorgesehen ist, um bedarfsweise die Pumpeneinheit 3.1-3.6 bzw. die zu der Pumpeneinheit 3.1-3.6 gehöhrenden Komponenten reinigen zu können, insbesondere bei einem Wechsel von einer ersten Pulverart auf einer hiervon verschiedene zweite Pulverart.

Zu diesem Zweck bietet es sich an, wenn die Pumpeneinheit 3.1-3.6 derart relativ zu der Reinigungsstation 5 bewegbar ist, dass diese bedarfsweise in der Reinigungsstation 5 gereinigt und insbesondere mit Reinigungsdruckluft gespült werden kann.

Im Rahmen dieser Reinigung ist es ferner denkbar, dass mit Hilfe der Reinigungsstation 5 nicht nur die Pumpeneinheit 3.1-3.6 und die zu der Pumpeneinheit 3.1-3.6 gehörenden Komponenten, insbesondere Pulverpumpen 4, sondern auch die Leitungssysteme gereinigt werden können, welche von der Pumpeneinheit 3.1-3.6 bzw. den Pulverpumpen 4 zu den Pulversprüheinrichtungen führen. Ferner ist es von Vorteil, wenn mit der Reinigungsstation 5 auch zumindest teilweise die Pulversprüheinrichtung, welche dem Mehrfarbenpulverzentrum 1 zugeordnet sind, gereinigt werden können.

Insbesondere ist es von Vorteil, wenn die der Pumpeneinheit 3.1-3.6 zugeordnete Andockeinheit 8 ausgebildet ist, bedarfsweise die Saugseite der mindestens einen Pulverpumpe 4 mit einem Reinigungsanschluss der Reinigungsstation 5 strömungsmäßig zu verbinden.

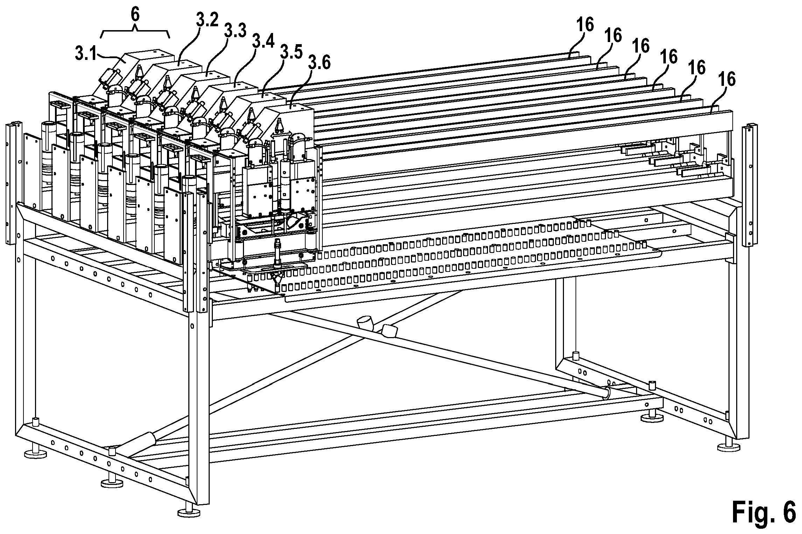

In FIG. 6 ist schematisch und in einer isometrischen Ansicht eine weitere exemplarische Ausführungsform des erfindungsgemäßen Mehrfarbenpulverzentrums 1 gezeigt, wobei allerdings der Übersichtlichkeit halber die Pulverbehälter sowie die Reinigungsstation nicht dargestellt sind.

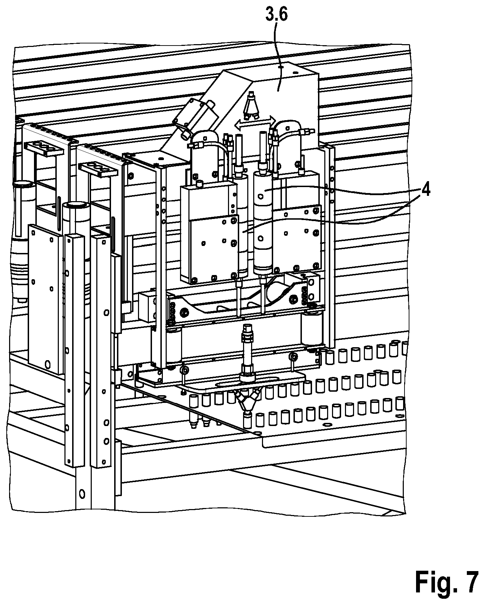

In FIG. 7 ist schematisch und in einer isometrischen Ansicht eine Detailansicht einer bei der exemplarischen Ausführungsform gemäß FIG. 6 zum Einsatz kommenden Pumpeneinheit 3.1 gezeigt.

Kurz zusammengefasst zeichnet sich die erfindungsgemäße Lösung insbesondere dadurch aus, dass sehr flexibel und insbesondere während eines laufenden Beschichtungsbetriebes, d.h. schnellstmöglich, ein Farbwechsel vorgenommen werden kann, wobei gleichzeitig die Qualität der Pulverzufuhr sichergestellt ist. Insbesondere ist ein Farbwechsel in einer Zeitperiode von maximal 45 Sekunden durchführbar, wobei das Mehrfarbenpulverzentrum 1 eine Vielzahl von unterschiedlichen Farben oder Pulverarten, beispielsweise insgesamt acht oder mehr Pulverfarben oder Pulverarten, gleichzeitig bereitstellen kann.

Die Pulverpumpen 4 der Pumpeneinheiten 3.1-3.6 gewährleisten, dass von dem Mehrfarbenpulverzentrum 1 gleichzeitig eine Vielzahl von Sprühbeschichtungseinrichtungen, wie beispielsweise Pulversprühpistolen, versorgt werden können. Gemäß bevorzugten Realisierungen des erfindungsgemäßen Mehrfarbenpulverzentrums sind bis zu 24 Sprühpistolen mit den entsprechenden Pulverpumpen des Mehrfarbenzentrums verbunden.

Die einzelnen Pulverbehälter sind vorzugsweise mit einem Fluidisiersystem ausgerüstet, wobei über ein vorzugsweise zentralisiertes Entlüftungssystem die einzelnen Pulverbehälter entlüftet werden.

Die Erfindung ist nicht auf die in den Zeichnungen dargestellten exemplarischen Ausführungsformen beschränkt, sondern ergibt sich aus einer Zusammenschau sämtlicher hierin offenbarter Merkmale.

So ist gemäß Realisierungen des erfindungsgemäßen Mehrfarbenpulverzentrums 1 vorgesehen, dass dem Mehrfarbenpulverzentrum 1 ein Recoverypulver-Rückführsystem zugeordnet ist zum bedarfsweisen Rückführen von Recoverypulver in mindestens einen der Pulverbehälter 2.1-2.12. Das Recoverypulver-Rückführsystem kann mindestens eine Rückführleitung insbesondere in Gestalt eines Rückführschlauches aufweisen, welcher insbesondere bedarfsweise strömungsmäßig mit einer Pulverbeschichtungskabine oder einem Pulverbeschichtungsarbeitsplatz einerseits und einem der Pulverbehälter 2.1-2.12 verbunden oder verbindbar ist zum Rückführen von Recoverypulver in den entsprechenden Pulverbehälter 2.1-2.12.

Die mindestens eine Rückführleitung des Recoverypulver-Rückführsystems kann an einer Wagen- oder Schlittenanordnung relativ zu den Pulverbehältern 2.1-2.12 bewegbar, insbesondere horizontal bewegbar angeordnet sein.

Alternativ oder zusätzlich hierzu kann die mindestens eine Rückführleitung relativ zu den Pulverbehältern 2.1-2.12 bewegbar, insbesondere vertikal bewegbar sein zum Ausbilden einer strömungsmäßigen Verbindung mit dem entsprechenden Pulverbehälter 2.1-2.12.

Auch ist es denkbar, wenn dem Mehrfarbenpulverzentrum 1 ein Pulverbehälter-Entlüftungssystem zugeordnet ist zum bedarfsweisen Entlüften der Pulverbehälter 2.1-2.12. Das Pulverbehälter-Entlüftungssystem kann mindestens eine Entlüftungsleitung insbesondere in Gestalt eines Entlüftungsschlauches aufweisen, welcher insbesondere bedarfsweise oder dauerhaft strömungsmäßig mit den Pulverbehältern 2.1-2.12 verbunden ist zum Entlüften der Pulverbehälter 2.1-2.12. Hierbei kann die mindestens eine Entlüftungsleitung an einer Wagen- oder Schlittenanordnung relativ zu den Pulverbehältern 2.1-2.12 bewegbar, insbesondere horizontal bewegbar sein.

## Patentansprüche

1. Mehrfarbenpulverzentrum (1) zum bedarfsweisen Versorgen von mindestens einer Pulversprüheinrichtung mit Beschichtungspulver unterschiedlicher Art, wobei das Mehrfarbenpulverzentrum (1) folgendes aufweist:
- einen ersten Pulverbehälter (2.1) zur Aufnahme von Beschichtungspulver einer ersten Art;
- mindestens einen zweiten Pulverbehälter (2.2-2.12) zur Aufnahme von Beschichtungspulver einer zweiten Art; und
- mindestens eine Pumpeneinheit (3.1-3.6) mit mindestens einer Pulverpumpe (4), insbesondere Dichtstrom- oder Dünnstrompulverpumpe, deren Druckseite strömungsmäßig mit dem Pulvereinlass einer Pulversprüheinrichtung verbunden oder verbindbar ist,
wobei die mindestens eine Pumpeneinheit (3.1-3.6) und/oder die Pulverbehälter (2.1-2.12) derart relativ zueinander bewegbar sind, dass bedarfsweise die Saugseite der mindestens einen Pulverpumpe (4) strömungsmäßig entweder mit dem Inneren des ersten Pulverbehälters (2.1) oder mit den Inneren des mindestens einen zweiten Pulverbehälters (2.2-2.12) verbunden oder verbindbar ist,
**dadurch gekennzeichnet, dass**
dass dem Mehrfarbenpulverzentrum (1) ein Recoverypulver-Rückführsystem zugeordnet ist zum bedarfsweisen Rückführen von Recoverypulver in den ersten Pulverbehälter (2.1) und/oder in den mindestens einen zweiten Pulverbehälter (2.2-2.12), wobei das Recoverypulver-Rückführsystem mindestens eine Rückführleitung insbesondere in Gestalt eines Rückführschlauches aufweist, welcher insbesondere bedarfsweise strömungsmäßig mit einer Pulverbeschichtungskabine einerseits und dem ersten Pulverbehälter (2.1) und/oder in dem mindestens einen zweiten Pulverbehälter (2.2-2.12) verbunden oder verbindbar ist zum Rückführen von Recoverypulver in den entsprechenden Pulverbehälter (2.1; 2.2-2.12), wobei die mindestens eine Rückführleitung an einer Wagen- oder Schlittenanordnung relativ zu dem ersten Pulverbehälter (2.1) und/oder dem mindestens einen zweiten Pulverbehälter (2.2-2.12) bewegbar, insbesondere horizontal bewegbar ist, wobei die mindestens eine Rückführleitung vorzugsweise relativ zu dem ersten Pulverbehälter (2.1) und/oder dem mindestens einen zweiten Pulverbehälter (2.2-2.12) bewegbar, insbesondere vertikal bewegbar ist zum Ausbilden einer strömungsmäßigen Verbindung mit dem entsprechenden Pulverbehälter (2.1; 2.2-2.12).

2. Mehrfarbenpulverzentrum (1) nach Anspruch 1,
wobei ferner eine Reinigungsstation (5) vorgesehen ist zum bedarfsweisen Reinigen der Pumpeneinheit (3.1-3.6) und/oder eines von der Pumpeneinheit (3.1-3.6) zu mindestens einer Pulversprüheinrichtung führenden Leitungssystems und/oder mindestens einer Pulversprüheinrichtung, insbesondere bei einem Wechsel von einer ersten Pulverart auf eine hiervon verschiedene zweite Pulverart.

3. Mehrfarbenpulverzentrum (1) nach Anspruch 2,
wobei die Pumpeneinheit (3.1-3.6) derart relativ zu der Reinigungsstation (5) bewegbar ist, dass diese bedarfsweise in oder an der Reinigungsstation (5) gereinigt und insbesondere mit Reinigungsdruckluft gespült werden kann; oder
wobei die Reinigungsstation (5) derart relativ zu der Pumpeneinheit (3.1-3.6) bewegbar ist, dass die Pumpeneinheit (3.1-3.6) bedarfsweise in oder an der Reinigungsstation (5) gereinigt und insbesondere mit Reinigungsdruckluft gespült werden kann.

4. Mehrfarbenpulverzentrum (1) nach Anspruch 2 oder 3,
wobei die Pulverbehälter (2.1-2.12) und die Reinigungsstation (5) geradlinig und nebeneinander angeordnet sind; und/oder
wobei der Pumpeneinheit (3.1-3.6) und/oder der Reinigungsstation (5) ein Antrieb zugeordnet ist, zum Bewegen der Pumpeneinheit (3.1-3.6) relativ zu der Reinigungsstation (5) derart, dass die Pumpeneinheit (3.1-3.6) bedarfsweise in oder an der Reinigungsstation (5) gereinigt und insbesondere mit Reinigungsdruckluft gespült werden kann.

5. Mehrfarbenpulverzentrum (1) nach einem der Ansprüche 1 bis 4,
wobei der Pumpeneinheit (3.1-3.6) eine Vertikalführungseinheit (7) zugeordnet ist zum bedarfsweisen Bewegen der Pumpeneinheit (3.1-3.6) oder Teilen hiervon in vertikaler Richtung; und/oder
wobei die Pumpeneinheit (3.1-3.6) eine Andockeinheit (8) aufweist, über welche die Saugseite der mindestens einen Pulverpumpe (4) bedarfsweise mit dem Inneren eines der Pulverbehälter (2.1-2.12) strömungsmäßig verbindbar ist,
wobei der Andockeinheit (8) vorzugsweise eine Vertikalführungseinheit (7) zugeordnet ist, mit welcher die Andockeinheit (8) in vertikaler Richtung relativ zu der mindestens einen Pulverpumpe (4) der Pumpeneinheit (3.1-3.6) und den Pulverbehältern (2.1-2.12) bedarfsweise bewegbar ist.

6. Mehrfarbenpulverzentrum (1) nach einem der Ansprüche 1 bis 5,
wobei dem ersten Pulverbehälter (2.1) und/oder dem mindestens einen zweiten Pulverbehälter (2.2-2.12) ein Antrieb, insbesondere Linearantrieb, zugeordnet ist zum bedarfsweisen Bewegen des entsprechenden Pulverbehälters (2.1-2.12) relativ zu der Pumpeneinheit (3.1-3.6),
wobei vorzugsweise der erste Pulverbehälter (2.1) und der mindestens eine zweite Pulverbehälter (2.2-2.12) jeweils unabhängig voneinander relativ zu der Pumpeneinheit (3.1-3.6) bewegbar sind.

7. Mehrfarbenpulverzentrum (1) nach einem der Ansprüche 1 bis 6,
wobei die Pumpeneinheit (3.1-3.6) mindestens eine insbesondere unabhängig voneinander betreibbare Pulverpumpe (4) aufweist, welche in der Pumpeneinheit (3.1-3.6) derart angeordnet sind, dass in einem Zustand, wenn die Pumpeneinheit (3.1-3.6) mit einem Pulverbehälter (2.1-2.12) oder einer Reinigungsstation (5) gekoppelt ist, die mindestens eine Pulverpumpe (4) saugseitig mit dem Inneren des Pulverbehälters (2.1-2.12) oder einer Reinigungsstation (5) verbunden ist.

8. Mehrfarbenpulverzentrum (1) nach einem der Ansprüche 1 bis 7,
wobei eine erste und mindestens eine weitere zweite Pumpeneinheit (3.1-3.6) mit jeweils mindestens einer Pulverpumpe (4), insbesondere Dichtstrompulverpumpe, vorgesehen sind, wobei die Pumpeneinheiten (3.1-3.6) unabhängig voneinander relativ zu den Pulverbehältern (2.1-2.12) bewegbar sind derart,
- dass bedarfsweise die Saugseite der mindestens einen Pulverpumpe (4) der ersten Pumpeneinheit (3.1-3.6) und die Saugseite der mindestens einen Pulverpumpe (4) der mindestens einen zweiten Pumpeneinheit (3.1-3.6) strömungsmäßig entweder mit dem Inneren des ersten Pulverbehälters (2.1) oder mit dem Inneren des mindestens einen zweiten Pulverbehälters (2.2-2.12) verbunden oder verbindbar sind; und/oder
- dass bedarfsweise die Saugseite der mindestens einen Pulverpumpe (4) der ersten Pumpeneinheit (3.1-3.6) strömungsmäßig mit dem Inneren eines ersten der mindestens zwei Pulverbehälter (2.1-2.12) und die Saugseite der mindestens einen Pulverpumpe (4) der zweiten Pumpeneinheit (3.1-3.6) strömungsmäßig mit dem Inneren des anderen der mindestens zwei Pulverbehälter (2.1-2.12) verbunden oder verbindbar sind.

9. Mehrfarbenpulverzentrum (1) nach Anspruch 8,
wobei die erste und die mindestens eine weitere zweite Pumpeneinheit (3.1-3.6) relativ zueinander und relativ zu den Pulverbehältern (2.1-2.12) in mindestens einer horizontalen Richtung bewegbar sind; und/oder
wobei der erste und der mindestens eine zweite Pulverbehälter (2.1-2.12) relativ zueinander und relativ zu der ersten und der mindestens einen zweiten Pumpeneinheit (3.1-3.6) in mindestens einer horizontalen Richtung bewegbar sind.

10. Mehrfarbenpulverzentrum (1) nach einem der Ansprüche 1 bis 9,
wobei eine Vielzahl von in einer Matrix zueinander angeordneten Pulverbehältern (2.1-2.12) vorgesehen ist, und wobei die mindestens eine Pumpeneinheit (3.1-3.6) in einer ersten horizontalen Richtung und in einer zur ersten horizontalen Richtung orthogonalen zweiten horizontalen Richtung derart relativ zu den Pulverbehältern (2.1-2.12) bewegbar ist, dass bedarfsweise die Saugseite der mindestens einen Pulverpumpe (4) strömungsmäßig mit dem Inneren eines Pulverbehälters der Vielzahl der Pulverbehältern (2.1-2.12) verbunden oder verbindbar ist; und/oder
wobei eine Vielzahl von in einer Matrix zueinander angeordneten Pulverbehältern (2.1-2.12) vorgesehen ist, und wobei die Pulverbehälter (2.1-2.12) in einer ersten horizontalen Richtung und in einer zur ersten horizontalen Richtung orthogonalen zweiten horizontalen Richtung derart relativ zu der mindestens einen Pumpeneinheit (3.1-3.6) bewegbar sind, dass bedarfsweise die Saugseite der mindestens einen Pulverpumpe (4) strömungsmäßig mit dem Inneren eines Pulverbehälters der Vielzahl der Pulverbehältern (2.1-2.12) verbunden oder verbindbar ist; und/oder
wobei eine Vielzahl von in einer Matrix zueinander angeordneten Pulverbehältern (2.1-2.12) vorgesehen ist, und wobei die Pulverbehälter (2.1-2.12) in einer ersten horizontalen Richtung und die mindestens eine Pumpeneinheit (3.1-3.6) in einer zur ersten horizontalen Richtung orthogonalen zweiten horizontalen Richtung derart bewegbar sind, dass bedarfsweise die Saugseite der mindestens einen Pulverpumpe (4) strömungsmäßig mit dem Inneren eines Pulverbehälters der Vielzahl der Pulverbehältern (2.1-2.12) verbunden oder verbindbar ist.

11. Mehrfarbenpulverzentrum (1) nach einem der Ansprüche 1 bis 10, wobei dem Mehrfarbenpulverzentrum (1) ein Pulverbehälter-Entlüftungssystem zugeordnet ist zum bedarfsweisen Entlüften des ersten Pulverbehälters (2.1) und/oder des mindestens einen zweiten Pulverbehälters (2.2-2.12).

12. Mehrfarbenpulverzentrum (1) nach Anspruch 11,
wobei das Pulverbehälter-Entlüftungssystem mindestens eine Entlüftungsleitung insbesondere in Gestalt eines Entlüftungsschlauches aufweist, welcher insbesondere bedarfsweise oder dauerhaft strömungsmäßig mit dem ersten Pulverbehälter (2.1) und/oder dem mindestens einen zweiten Pulverbehälter (2.2-2.12) verbunden ist zum Entlüften des entsprechenden Pulverbehälters (2.1; 2.2-2.12).

13. Mehrfarbenpulverzentrum (1) nach Anspruch 11 oder 12,
wobei die mindestens eine Entlüftungsleitung an einer Wagen- oder Schlittenanordnung relativ zu dem ersten Pulverbehälter (2.1) und/oder dem mindestens einen zweiten Pulverbehälter (2.2-2.12) bewegbar, insbesondere horizontal bewegbar ist.

## Claims

1. A multicolor powder center (1) for supplying at least one powder spraying device with different types of coating powder as required, the multicolor powder center (1) comprising:
- a first powder container (2.1) for accommodating a first type of coating powder;
- at least one second powder container (2.2-2.12) for accommodating a second type of coating powder; and
- at least one pump unit (3.1-3.6) having at least one powder pump (4), particularly a dense phase or dilute phase powder pump, the pressure side of which is fluidly connected or connectable to the powder inlet of a powder spraying device,
wherein the at least one pump unit (3.1-3.6) and/or the powder containers (2.2-2.12) is/are movable relative to each other such that the suction side of the at least one powder pump (4) is fluidly connected or connectable to either the interior of the first powder container (2.1) or to the interior of the at least one second powder container (2.2-2.12) as required,
**characterized in that**
a recovery powder recirculation system is assigned to the multicolor powder center (1) for returning recovery powder into the first powder container (2.1) and/or into the at least one second powder container (2.2-2.12) as needed, wherein the recovery powder recirculation system comprises at least one return line, particularly in the form of a return hose, which is on the one hand fluidly connected or connectable, in particular as needed, to a powder coating booth and the first powder container (2.1) and/or into the at least one second powder container (2.2-2.12) for returning recovery powder into the respective powder container (2.1; 2.2-2.12), wherein the at least one return line is movable, particularly horizontally movable, on a carriage or slide assembly relative to the first powder container (2.1) and/or the at least one second powder container (2.2-2.12), wherein the at least one return line is movable preferably relative to the first powder container (2.1) and/or the at least one second powder container (2.2-2.12), particularly vertically movable, for forming a fluidic connection with the respective powder container (2.1; 2.2-2.12).

2. The multicolor powder center (1) according to claim 1,
wherein a cleaning station (5) is further provided for cleaning the pump unit (3.1-3.6) and/or a line system leading from the pump unit (3.1-3.6) to at least one powder spraying device and/or at least one powder spraying device when needed, particularly when changing from a first type of coating powder to a different second type of coating powder.

3. The multicolor powder center (1) according to claim 2,
wherein the pump unit (3.1-3.6) is movable relative to the cleaning station (5) such that it can be cleaned and in particular flushed with cleaning compressed air in or at the cleaning station (5) when needed; or
wherein the cleaning station (5) is movable relative to the pump unit (3.1-3.6) such that the pump unit (3.1-3.6) can be cleaned and in particular flushed with cleaning compressed air in or at the cleaning station (5) when needed.

4. The multicolor powder center (1) according to claim 2 or 3,
wherein the powder containers (2.2-2.12) and the cleaning station (5) are in a straight-line and side-by-side arrangement; and/or
wherein a drive is assigned to the pump unit (3.1-3.6) and/or the cleaning station (5) for moving the pump unit (3.1-3.6) relative to the cleaning station (5) such that the pump unit (3.1-3.6) can be cleaned and in particular flushed with cleaning compressed air in or at the cleaning station (5) when needed.

5. The multicolor powder center (1) according to one of claims 1 to 4,
wherein a vertical guide unit (7) is assigned to the pump unit (3.1-3.6) for the vertical moving of the pump unit (3.1-3.6) or parts thereof as needed; and/or
wherein the pump unit (3.1-3.6) comprises a docking unit (8) via which the suction side of the at least one powder pump (4) can be fluidly connected to the interior of one of the powder containers (2.2-2.12) as required,
wherein a vertical guide unit (7) is preferably assigned to the docking unit (8), by means of which the docking unit (8) is vertically movable as needed relative to the at least one powder pump (4) of the pump unit (3.1-3.6) and the powder containers (2.2-2.12).

6. The multicolor powder center (1) according to one of claims 1 to 5,
wherein a drive, in particular a linear drive, is assigned to the first powder container (2.1) and/or the at least one second powder container (2.2-2.12) for moving the respective powder container (2.2-2.12) relative to the pump unit (3.1-3.6) as needed,
wherein the first powder container (2.1) and/or the at least one second powder container (2.2-2.12) are each preferably able to move relative to the pump unit (3.1-3.6) independently of each other.

7. The multicolor powder center (1) according to one of claims 1 to 6,
wherein the pump unit (3.1-3.6) has at least one, in particular independently operable, powder pump (4) arranged in the pump unit (3.1-3.6) such that in a state of the pump unit (3.1-3.6) being coupled to a powder container (2.2-2.12) or a cleaning station (5), the suction side of the at least one powder pump (4) is connected to the interior of the powder container (2.2-2.12) or a cleaning station (5).

8. The multicolor powder center (1) according to one of claims 1 to 7,
wherein a first and at least one further second pump unit (3.1-3.6) are in each case provided with at least one powder pump (4), particularly a dense phase powder pump, wherein the pump units (3.1-3.6) are movable relative to the powder containers (2.2-2.12) independently of each other such that
- the suction side of the at least one powder pump (4) of the first pump unit (3.1-3.6) and the suction side of the at least one powder pump (4) of the at least one second pump unit (3.1-3.6) are fluidly connected or connectable to either the interior of the first powder container (2.1) or to the interior of the at least one second powder container (2.2-2.12) as required; and/or
- the suction side of the at least one powder pump (4) of the first pump unit (3.1-3.6) is fluidly connected or connectable to the interior of a first of the at least two powder containers (2.2-2.12) and the suction side of the at least one powder pump (4) of the second pump unit (3.1-3.6) is fluidly connected or connectable to the interior of the other of the at least two powder containers (2.2-2.12) as required.

9. The multicolor powder center (1) according to claim 8,
wherein the first and the at least one further second pump unit (3.1-3.6) are movable relative to each other and relative to the powder containers (2.2-2.12) in at least one horizontal direction; and/or
wherein the first and the at least one second powder container (2.2-2.12) are movable relative to each other and relative to the first and the at least one second pump unit (3.1-3.6) in at least one horizontal direction.

10. The multicolor powder center (1) according to one of claims 1 to 9,
wherein a plurality of powder containers (2.2-2.12) arranged together in a matrix is provided, and wherein the at least one pump unit (3.1-3.6) is movable in a first horizontal direction and in a second horizontal direction orthogonal to the first horizontal direction relative to the powder containers (2.2-2.12) such that the suction side of the at least one powder pump (4) is fluidly connected or connectable to the interior of one powder container of the plurality of powder containers (2.2-2.12) as required; and/or
wherein a plurality of powder containers (2.2-2.12) arranged together in a matrix is provided, and wherein the powder containers (2.2-2.12) are movable in a first horizontal direction and in a second horizontal direction orthogonal to the first horizontal direction relative to the at least one pump unit (3.1-3.6) such that the suction side of the at least one powder pump (4) is fluidly connected or connectable to the interior of one powder container of the plurality of powder containers (2.2-2.12) as required; and/or
wherein a plurality of powder containers (2.2-2.12) arranged together in a matrix is provided, and wherein the powder containers (2.2-2.12) are movable in a first horizontal direction and the at least one pump unit (3.1-3.6) is movable in a second horizontal direction orthogonal to the first horizontal direction such that the suction side of the at least one powder pump (4) is fluidly connected or connectable to the interior of one powder container of the plurality of powder containers (2.2-2.12) as required.

11. The multicolor powder center (1) according to one of claims 1 to 10, wherein a powder container venting system is assigned to the multicolor powder center (1) for venting the first powder container (2.1) and/or the at least one second powder container (2.2-2.12) as needed.

12. The multicolor powder center (1) according to claim 11,
wherein the powder container venting system comprises at least one vent line, particularly in the form of a venting hose, which is fluidly connected, particularly when required or permanently, to the first powder container (2.1) and/or the at least one second powder container (2.2-2.12) for venting the respective powder container (2.1; 2.2-2.12).

13. The multicolor powder center (1) according to claim 11 or 12,
wherein the at least one vent line is movable, particularly horizontally movable, on a carriage or slide assembly relative to the first powder container (2.1) and/or the at least one second powder container (2.2-2.12).

## Revendications

1. Centre de poudres de plusieurs couleurs (1) destiné à alimenter, en fonction des besoins, au moins un moyen de pulvérisation par poudre en poudre de revêtement de différentes sortes, le centre de poudres de plusieurs couleurs (1) présentant les éléments suivants :
- un premier conteneur de poudre (2.1) destiné à recevoir une poudre de revêtement d'une première sorte ;
- au moins un deuxième conteneur de poudre (2.2-2.12) destiné à recevoir une poudre de revêtement d'une seconde sorte ; et
- au moins une unité de pompe (3.1-3.6) comprenant au moins une pompe à poudre (4), en particulier une pompe de flux de poudre en phase dense ou en phase diluée, dont un côté pression est relié ou peut être relié en communication fluidique à l'entrée de poudre d'un moyen de pulvérisation de poudre,
dans lequel ladite au moins une unité de pompe (3.1-3.6) et/ou les conteneurs de poudre (2.1-2.12) peuvent être déplacés l'une relativement aux autres de telle sorte que le côté aspiration de ladite au moins une pompe à poudre (4) est reliée ou peut être reliée en communication fluidique, en fonction des besoins, soit avec l'intérieur du premier conteneur de poudre (2.1), soit avec l'intérieur dudit au moins un deuxième conteneur de poudre (2.2-2.12),
**caractérisé en ce que**
il est associé au centre de poudres de plusieurs couleurs (1) un système de retour de poudre de récupération destiné à renvoyer de la poudre de récupération, en fonction des besoins, dans le premier conteneur de poudre (2.1) et/ou dans ledit au moins un deuxième conteneur de poudre (2.2-2.12), le système de retour de poudre récupération présentant au moins une conduite de retour, en particulier sous la forme d'un flexible de retour qui est relié ou peut être relié en communication fluidique, en particulier en fonction des besoins, à une cabine de revêtement par poudre d'une part et au premier conteneur de poudre (2.1) et/ou dans ledit au moins un deuxième conteneur de poudre (2.2-2.12) pour renvoyer de la poudre de récupération dans le conteneur de poudre correspondant (2.1 ; 2.2-2.12), ladite au moins une conduite de retour pouvant être déplacée, en particulier déplacée de manière horizontale, au niveau d'un agencement de chariots ou coulisses relativement au premier conteneur de poudre (2.1) et/ou audit au moins un deuxième conteneur de poudre (2.2-2.12), ladite au moins une conduite de retour pouvant être déplacée, en particulier déplacée de manière verticale, de préférence relativement au premier conteneur de poudre (2.1) et/ou audit au moins un deuxième conteneur de pouvoir (2.2-2.12), pour réaliser une connexion en communication fluidique avec le conteneur de poudre correspondant (2.2 ;2.2-2.12).

2. Centre de poudres de plusieurs couleurs (1) selon la revendication 1, dans lequel il est prévu en outre une station de nettoyage (5) destinée à nettoyer, en fonction des besoins, l'unité de pompe (3.1-3.6) et/ou un système de conduite menant depuis l'unité de pompe (3.1-3.6) jusqu'à au moins un moyen de pulvérisation et/ou au moins un moyen de pulvérisation, en particulier lors d'un changement pour passer d'une première sorte de pompe à une seconde sorte de pompe différente de celle-ci.

3. Centre de poudres de plusieurs couleurs (1) selon la revendication 2,
dans lequel l'unité de pompe (3.1-3.6) peut être déplacée relativement à la station de nettoyage (5) de manière à être nettoyée, en fonction des besoins, dans ou au niveau de la station de nettoyage (5) et en particulier rincée à l'air comprimé de nettoyage ; ou
dans lequel la station de nettoyage (5) peut être déplacée relativement à l'unité de pompe (3.1-3.6) de telle sorte que l'unité de pompe (3.1-3.6) est nettoyée en fonction des besoins dans ou au niveau de la station de nettoyage (5) et en particulier peut être rincée à l'air comprimé de nettoyage.

4. Centre de poudres de plusieurs couleurs (1) selon la revendication 2 ou 3, dans lequel le conteneur de poudre (2.1-2.12) et la station de nettoyage (5) sont agencés en ligne droite et l'un à côté de l'autre ; et/ou
dans lequel il est associé à l'unité de pompe (3.1-3.6) et/ou à la station de nettoyage (5) un entraînement destiné à déplacer l'unité de pompe (3.1-3.6) relativement à la station de nettoyage (5) de telle sorte que l'unité de pompe (3.1-3.6) est nettoyée en fonction des besoins dans ou au niveau de la station de nettoyage (5) et en particulier peut être rincée à l'air comprimé de nettoyage.

5. Centre de poudres de plusieurs couleurs (1) selon l'une des revendications 1 à 4,
dans lequel il est associé à l'unité de pompe (3.1-3.6) une unité de guidage vertical (7) pour déplacer en fonction des besoins l'unité de pompe (3.1-3.6) ou des parties de celle-ci dans une direction verticale ; et/ou
dans lequel l'unité de pompe (3.1-3.6) présente une unité d'accueil (8) par l'intermédiaire de laquelle le côté aspiration de ladite au moins une pompe à poudre (4) peut être relié en communication fluidique en fonction des besoins avec l'intérieur de l'un des conteneurs de poudre (2.2-2.12),
dans lequel il est associé à l'unité d'accueil (8), de préférence, une unité de guidage vertical (7) avec laquelle l'unité d'accueil (8) peut être déplacée en fonction des besoins dans une direction verticale relativement à ladite au moins une pompe à poudre (4) de l'unité de pompe (3.1-3.6) et aux conteneurs de poudre (2.1-2.12).

6. Centre de poudres de plusieurs couleurs (1) selon l'une des revendications 1 à 5,
dans lequel il est associé au premier conteneur de poudre (2.1) et/ou audit au moins un deuxième conteneur de poudre (2.2-2.12) un entraînement, en particulier un entraînement linéaire, pour déplacer en fonction des besoins le conteneur de poudre correspondant (2.2-2.12) relativement à l'unité de pompe (3.1-3.6),
dans lequel de préférence le premier conteneur de poudre (2.1) et ledit au moins un deuxième conteneur de poudre (2.2-2.12) peuvent être déplacés chacun indépendamment l'un de l'autre relativement à l'unité de pompe (3.1-3.6).

7. Centre de poudres de plusieurs couleurs (1) selon l'une des revendications 1 à 6,
dans lequel l'unité de pompe (3.1-3.6) présente au moins une pompe à poudre (4) pouvant fonctionner en particulier de manière indépendante, qui est agencée dans l'unité de pompe (3.1-3.6) de telle sorte que, dans un état dans lequel l'unité de pompe (3.1-3.6) est couplée à un conteneur de poudre (2.1-2.12) ou à une station de nettoyage (5), ladite au moins une pompe à poudre (4) est reliée côté aspiration avec l'intérieur du conteneur de poudre (2.1-2.12) ou une station de nettoyage (5).

8. Centre de poudres de plusieurs couleurs (1) selon l'une des revendications 1 à 7,
dans lequel il est prévu une première et au moins une deuxième unité de pompe supplémentaire (3.1-3.6) comprenant chacune au moins une pompe à poudre (4), en particulier une pompe à flux de poudre en phase dense, les unités de pompe (3.1-3.6) pouvant être déplacées indépendamment l'une de l'autre relativement aux conteneurs de poudre (2.1-2.12) de telle sorte que
- le côté aspiration de ladite au moins une pompe à poudre (4) de la première unité de pompe (3.1-3.6) et le côté aspiration de ladite au moins une pompe à poudre (4) de ladite au moins une deuxième unité de pompe (3.1-3.6) sont reliées ou peuvent être reliées en communication fluidique, en fonction des besoins, soit avec l'intérieur du premier conteneur de poudre (2.1), soit avec l'intérieur dudit au moins un deuxième conteneur de poudre (2.2-2.12) ; et/ou
- le côté aspiration de ladite au moins une pompe à poudre (4) de la première unité de pompe (3.1-3.6) est relié ou peut être relié en communication fluidique, en fonction des besoins, avec l'intérieur d'un premier desdits au moins deux conteneurs de poudre (2.1-2.12) et le côté aspiration de ladite au moins une pompe à poudre (4) de la deuxième unité de pompe (3.1-3.6) est relié ou peut être relié en communication fluidique, en fonction des besoins, avec l'intérieur de l'autre desdits au moins deux conteneurs de poudre (2.1-2.12).

9. Centre de poudres de plusieurs couleurs (1) selon la revendication 8, dans lequel la première et ladite au moins une deuxième unité de pompe supplémentaire (3.1-3.6) peuvent être déplacées l'une relativement à l'autre et relativement aux conteneurs de poudre (2.1-2.12) dans au moins une direction horizontale ; et/ou
dans lequel le premier et ledit au moins un deuxième conteneur de poudre (2.1-2.12) peuvent être déplacés l'un relativement à l'autre et relativement à la première et à ladite au moins une deuxième unité de pompe (3.1-3.6) dans au moins une direction horizontale.

10. Centre de poudres de plusieurs couleurs (1) selon l'une des revendications 1 à 9,
dans lequel il est prévu une pluralité de conteneurs de poudre (2.1-2.12) agencés les uns par rapport aux autres dans une matrice, et dans lequel ladite au moins une unité de pompe (3.1-3.6) peut être déplacée dans une première direction horizontale et dans une seconde direction horizontale orthogonale à la première direction horizontale relativement aux conteneurs de poudre (2.1-2.12) de telle sorte que le côté aspiration de ladite au moins une pompe à poudre (4) est relié ou peut être relié en communication fluidique, en fonction des besoins, avec l'intérieur d'un conteneur de poudre de la pluralité de conteneurs de poudre (2.1-2.12) ; et/ou
dans lequel il est prévu une pluralité de conteneurs de poudre (2.1-2.12) agencés les uns par rapport aux autres dans une matrice, et dans lequel les conteneurs de poudre (2.1-2.12) peuvent être déplacés dans une première direction horizontale et dans une seconde direction horizontale orthogonale à la première direction horizontale relativement à ladite au moins une unité de pompe (3.1-3.6) de telle sorte que le côté aspiration de ladite au moins une pompe à poudre (4) est relié ou peut être relié en communication fluidique, en fonction des besoins, avec l'intérieur d'un conteneur de poudre de la pluralité de conteneurs de poudre (2.1-2.12) ; et/ou
dans lequel il est prévu une pluralité de conteneurs de poudre (2.1-2.12) agencés les uns par rapport aux autres dans une matrice, et dans lequel les conteneurs de poudre (2.1-2.12) peuvent être déplacés dans une première direction horizontale et ladite au moins une unité de pompe (3.1-3.6) dans une seconde direction horizontale orthogonale à la première direction horizontale de telle sorte que le côté aspiration de ladite au moins une pompe à poudre (4) est relié ou peut être relié en communication fluidique, en fonction des besoins, avec l'intérieur d'un conteneur de poudre de la pluralité de conteneurs de poudre (2.1-2.12).

11. Centre de poudres de plusieurs couleurs (1) selon l'une des revendications 1 à 10,
dans lequel il est associé au centre de poudres de plusieurs couleurs (1) un système de purge de conteneurs de poudre pour purger, en fonction des besoins, le premier conteneur de poudre (2.1) et/ou ledit au moins un deuxième conteneur de poudre (2.2-2.12).

12. Centre de poudres de plusieurs couleurs (1) selon la revendication 11, dans lequel le système de purge de conteneurs de poudre présente au moins une conduite de purge en particulier sous la forme d'un flexible de purge qui est relié en communication fluidique, en particulier en fonction des besoins ou durablement, au premier conteneur de poudre (2.1) et/ou audit au moins un deuxième conteneur de poudre (2.2-2.12) pour purger le conteneur de poudre correspondant (2.1 ; 2.2-2.12).

13. Centre de poudres de plusieurs couleurs (1) selon la revendication 11 ou 12,
dans lequel ladite au moins une conduite de purge peut être déplacée, en particulier déplacée de manière horizontale, au niveau d'un agencement de chariots ou coulisses, relativement au premier conteneur de poudre (2.1) et/ou audit au moins un deuxième conteneur de poudre (2.2-2.12).
